# EUROPEAN PATENT APPLICATION

(11) **EP 3 032 478 A1**
(43) Date of publication of application: **15.06.2016**
(21) Application number: 15180479.6
(22) Date of filing: 11.08.2015
(51) Int. Cl.: G06Q 20/32, G06Q 30/06

(54) **MOBILE TERMINAL AND METHOD FOR CONTROLLING THE SAME**

(30) Priority: 10.12.2014 KR 20140177700
(71) Applicant: LG Electronics Inc., Yeongdeungpo-gu Seoul 150-721 (KR)
(72) Inventor: KWON, Sungho, 137-893 Seoul (KR); KANG, Youngchang, 137-893 Seoul (KR)
(74) Representative: Ter Meer Steinmeister & Partner

(57) **Abstract**

A mobile terminal displays a chat window including a merchandise seller as a message correspondent; activates a payment function linked to a message application being executed; displays purchase information of a product in the chat window in response to a purchase order; displays a payment window over the chat window in response to an input for selecting the purchase information; and displays a result of a payment transaction processed for purchase of the product in the chat window in response to a payment request received via the payment window. In response to an input for adding at least one message correspondent to the chat window in order to perform a group purchase for the product, the mobile terminal updates the purchase information based on a purchase quantity entered by message correspondents who participate in the group purchase and displays the updated purchase information in the chat window.

## Description

### CROSS-REFERENCE TO RELATED APPLICATIONS

This application claims the benefit of earlier filing date and right of priority to Korean Patent Application No. 10-2014-0177700, filed on December 10, 2014.

### BACKGROUND OF THE INVENTION

### Field of the Invention

The present invention is related to a mobile terminal capable of processing mobile payment transactions more conveniently and a control method for the terminal.

### Discussion of the Related Art

Terminals may be generally classified as mobile/portable terminals or stationary terminals according to their mobility. Mobile terminals may also be classified as handheld terminals or vehicle mounted terminals according to whether or not a user can directly carry the terminal.

Mobile terminals have become increasingly more functional. Examples of such functions include data and voice communications, capturing images and video via a camera, recording audio, playing music files via a speaker system, and displaying images and video on a display. Some mobile terminals include additional functionality which supports game playing, while other terminals are configured as multimedia players. More recently, mobile terminals have been configured to receive broadcast and multicast signals which permit viewing of content such as videos and television programs.

Efforts are ongoing to support and increase the functionality of mobile terminals. Such efforts include software and hardware improvements, as well as changes and improvements in the structural components.

### SUMMARY OF THE INVENTION

Accordingly, an object of the present invention is to address the above-noted and other problems.

The present invention has been made in an effort to provide a mobile terminal capable of processing payment transactions in a more convenient manner by using a message or messenger application without employing a complicated payment procedure and a control method for the mobile terminal.

Also, the present invention provides a mobile terminal capable of processing payment transactions in a more convenient manner by using a message or messenger application without employing a complicated authentication procedure and a control method for the mobile terminal.

Also, the present invention provides a mobile terminal capable of processing payment transactions while protecting personal information in a more secure manner by obviating a procedure of entering personal information required for payment and a control method for the mobile terminal.

To achieve the aforementioned or another objective, a mobile terminal according to one aspect of the present invention includes a display; a wireless communication unit configured to communicate with a message server; and a controller configured to: execute a message application by communicating with the message server via the wireless communication unit; cause the display to display a chat window including a merchandise seller as a message correspondent; activate a payment function linked to the message application; cause the display to display purchase information of a product in the chat window in response to a purchase order for the product sent to the merchandise seller; cause the display to display a payment window over the chat window in response to an input received for selecting the purchase information; and cause the display to display a result of a payment transaction processed for purchase of the product in the chat window in response to a payment request received via the payment window, wherein in response to an input received for adding at least one message correspondent to the chat window in order to perform a group purchase for the product, the controller is further configured to: update the purchase information based on a purchase quantity entered by message correspondents who participate in the group purchase; and cause the display to display the updated purchase information in the chat window.

The execution screen of the message application or the chat window may further include a soft key for activating the payment function.

The controller causes displaying on the display of a list of message correspondents linked to a phone book installed in the mobile terminal, adds the merchandise seller to the list of message correspondents if the merchandise seller is registered as a message correspondent, maps purchase information of the product into the added list of merchandise sellers, and causes displaying of the mapped purchase information.

The purchase information further includes a remittance state check menu by which payment can be checked, and the controller causes displaying of the payment window over the chat window if an input selecting the remittance state check menu is received.

The controller causes changing of the remittance state check menu to a payment complete state if payment is completed via the payment window and causes displaying of the remittance state check menu changed.

The purchase information includes at least one of product information, purchase quantity, delivery address, or a purchase goods recommendation menu.

The payment window includes at least one of balance information of a virtual currency charged through the message application, balance information of an account registered in a financial server, an amount of payment, or a payment execution button.

Therefore, according to one embodiment of the present invention, a user can handle payment for desired goods more conveniently through a message without separately providing personal information such as account information if only purchase quantity and delivery address are entered.

The controller causes displaying on the chat window of a message informing about delivery status of purchased goods. Accordingly, delivery status information can be monitored in real-time.

In case the payment request is received, the controller causes displaying of an authentication window over the chat window and based on the authentication information received through the authentication window, carries out payment for the purchased goods.

The controller registers account information registered in a financial server by a user input in the message application.

The controller adds at least one message correspondent to the chat window to carry out group purchase for the goods; based on purchase quantities entered by message correspondents participating in the group purchase, updates the purchase information; and causes displaying of the updated purchase information on the chat window.

In case an input requesting lump-sum payment for the group purchase is received, the controller carries out payment based on the group purchase quantities and causes transmission of a remittance request message for each payment to each of message correspondents participating in the group purchase.

If it turns out balance is not enough to handle a received input requesting lump-sum payment for the group purchase, the controller charges the insufficient balance so that lump-sum payment can be processed.

If it turns out balance is not enough to handle a received input requesting lump-sum payment for the group purchase, the controller causes transmission of a payment request message to each of message correspondents participating in the group purchase.

As the group purchase proceeds, the controller causes displaying of group purchase notification information in a message correspondent list.

Therefore, anyone who participates in a group purchase can apply for the group purchase more conveniently by entering only purchase quantity information and delivery address without separately providing personal information such as account information. Moreover, individual payments are allowed so that by using a message application, each participant can remit payment directly to the corresponding merchandise seller rather than an organizer of the group purchase.

If receiving the payment result message via SMS and receiving an input for selecting the received payment result message, the controller searches for at least one message correspondent to settle a payment, opens a chat window with a searched message correspondent as a chat partner, and causes displaying on the chat window of a message requesting settlement of the payment.

A control method for a mobile terminal according to another aspect of the present invention includes executing a message application; displaying, on a display, a chat window including a merchandise seller as a message correspondent; activating a payment function linked to the message application; displaying purchase information of a product in the chat window in response to a purchase order for the product sent to the merchandise seller; displaying a payment window over the chat window in response to an input received for selecting the purchase information; displaying, in the chat window, a result of a payment transaction processed for purchase of the product in response to a payment request received via the payment window; and in response to an input received for adding at least one message correspondent to the chat window in order to perform a group purchase for the product, updating the purchase information based on a purchase quantity entered by message correspondents participating in the group purchase and displaying the updated purchase information in the chat window.

Meanwhile, the control method for a mobile terminal may further include displaying an execution screen of a message application and displaying a soft key for activating a payment function on the execution screen of the message application or on the chat window; and activating a payment function during execution of the message application when the soft key is selected.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below and the accompanying drawings, which are given by illustration only, and thus are not limitative of the present invention, and wherein:
FIG. 1 is a block diagram of a mobile terminal in accordance with the present disclosure;
FIG. 2 illustrates a simplified structure of a system in which a control method for a mobile terminal according to one embodiment of the present invention is implemented;
FIG. 3 is a flow diagram of a control method for a mobile terminal according to one embodiment of the present invention;
FIGs. 4a to 4d illustrate a remittance process using a message application according to an embodiment of the present invention;
FIGs. 5a to 5d illustrate a process of remitting payment to a plurality of message correspondents through a message application;
FIGs. 6a to 6c illustrate an example of requesting a message correspondent to remit payment;
FIG. 7 illustrates an example where a payment function is displayed being linked to a list of message correspondents;
FIGs. 8a to 8c illustrate a process of remitting payment through a message application when a request for remittance is received;
FIG. 9 illustrates a process of registering a merchandise seller as a message correspondent;
FIGs. 10a to 10c illustrate a process of carrying out payment for goods during execution of a message application;
FIGs. 11a and 11b illustrate an example of monitoring a delivery status of purchased goods through a message application;
FIGs. 12a and 12b illustrate an example of recommending purchased goods to friends or a message correspondent;
FIGs. 13 and 14a to 14c illustrate a process of group purchase with a plurality of message correspondents through a message application according to one embodiment of the present invention;
FIGs. 15a to 15d illustrate a process of inviting people for group purchase through a message application;
FIGs. 16a to 16c illustrate an example of changing a group purchase quantity through a message application;
FIGs. 17a to 17e are screen examples where payment for group purchase is carried out through a message application;
FIGs. 18a to 18c illustrate an example of carrying out a real-time account transfer during execution of a message application;
FIGs. 19a to 19c and 20a to 20c illustrate a process where one person participating in a group purchase carries out payment for others while the group purchase is being carried out through a message application;
FIGs. 21a and 21b illustrate a process of charging a virtual currency that a message application provides;
FIGs. 22a and 22b illustrate an example of providing purchase status information in real-time through a message application;
FIG. 23 illustrates another example where a purchase result is notified through a message application after a group purchase is completed through the message application;
FIGs. 24 to 27 illustrate a process of recommending goods to others through a message application and handling a purchase of recommended goods;
FIGs. 28a to 28c and 29 illustrate an operation of a mobile terminal of each message correspondent who receives a remittance request message after an organizer of the group purchase has completed lump-sum payment;
FIGs. 30 to 33 illustrate an operation of a mobile terminal when balance is insufficient while an organizer of a group purchase requested a lump-sum payment;
FIGs. 34, 35, 36a, 36b, 37a, and 37b illustrate an example of carrying out payment by accessing a new payment system through a message application;
FIGs. 38a to 38d illustrate an example of carrying out payment by dividing the amount of payment during a payment process through a message application;
FIGs. 39a to 39c, 40a, and 40b illustrate an example where an event predetermined through a message application occurs and payment is carried out in response to the event;
FIGs. 41a to 41d illustrate a process of settling payment in conjunction with a message payment system in case a payment check message is received; and
FIG. 42 illustrates another example of carrying out payment by using a message application.

### DETAILE DESCRIPTION OF THE INVENTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings. It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

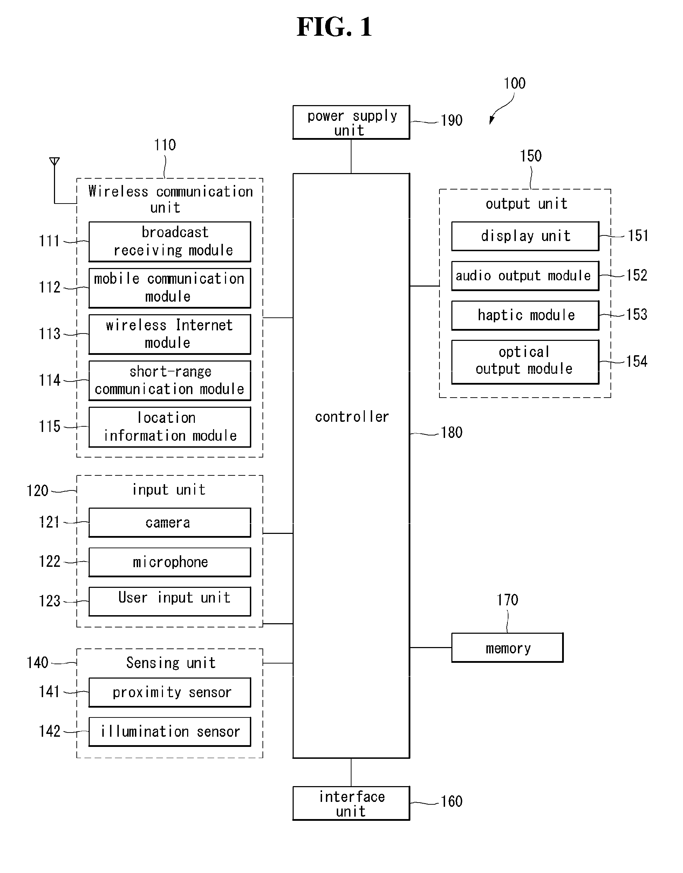

Reference is now made to FIG. 1, where FIG. 1 is a block diagram of a mobile terminal in accordance with the present disclosure. The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented.

Referring now to FIG. 1, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output by the various components depicted in FIG. 1, or activating application programs stored in the memory 170. As one example, the controller 180 controls some or all of the components illustrated in FIG. 1 according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body. Referring still to FIG. 1, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), EV-DO(Enhanced Voice-Data Optimized or Enhanced Voice-Data Only), Wideband CDMA (WCDMA), High Speed Downlink Packet access (HSDPA), HSUPA(High Speed Uplink Packet Access), Long Term Evolution (LTE), LTE-A(Long Term Evolution-Advanced), and the like). Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA(High Speed Uplink Packet Access), Long Term Evolution (LTE), LTE-A(Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the wireless Internet module 113 may cooperate with, or function as, the mobile communication module 112.

The short-range communication module 114 is configured to facilitate short-range communications. Suitable technologies for implementing such short-range communications include BLUETOOTH™, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

In some embodiments, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provides internal power and supplies the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Further preferred embodiments will be described in more detail with reference to additional drawing figures. It is understood by those skilled in the art that the present features can be embodied in several forms without departing from the characteristics thereof.

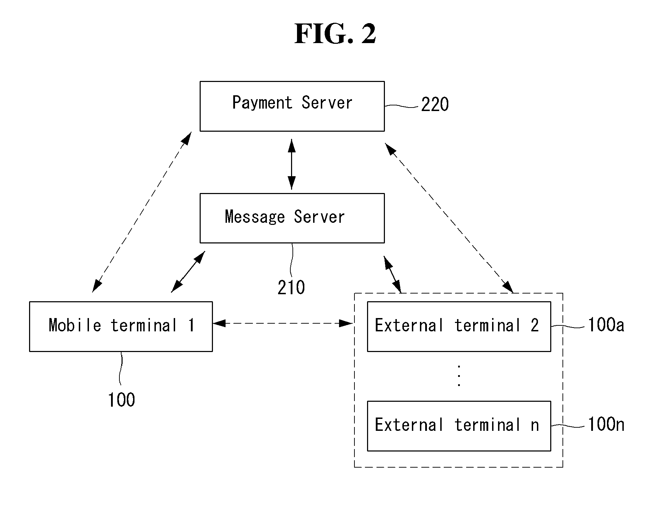

FIG. 2 illustrates a simplified structure of a system in which a control method for a mobile terminal according to one embodiment of the present invention is implemented.

With reference to FIG. 2, a system implementing a control method for a mobile terminal according to one embodiment of the present invention comprises a mobile terminal 100, a message server 210, a payment server 220, and an external mobile terminal 100a, ..., 100n.

The mobile terminal 100 can execute a message application by communicating via the message server 210. The mobile terminal 100 can perform a message function by executing the message application and adding at least one external device 100a, ..., 100n as a message correspondent. The at least one external device 100a, ..., 100n, too, can execute a predetermined message function together with the mobile terminal 100 by communicating via the message server 210.

The message server 210 provides a mobile terminal 100 and the at least one external device 100a, ..., 100n with a message application and provides various services available through the message application. According to one embodiment of the present invention, services that the message server provides may include a payment function. To provide a service corresponding to the payment function, the message server 210 can be linked to a predetermined payment server 220.

The payment server 220 may include at least one financial server being installed for financial institutions providing predetermined banking services and providing mobile banking services.

According to one embodiment of the present invention, if a mobile terminal 100 connects to a message server 210, executes a message application, and activates a payment function during execution of the message application, the message application is connected (or linked) to the financial server 220, thereby receiving a banking service (more specifically, a payment service) through the message application.

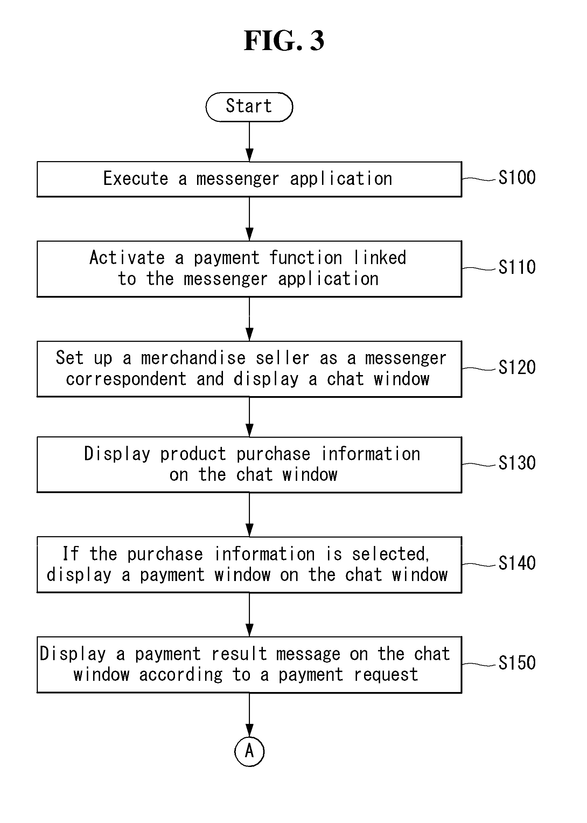

FIG. 3 is a flow diagram of a control method for a mobile terminal according to one embodiment of the present invention.

A control method for a mobile terminal according to one embodiment of the present invention can be realized by the mobile terminal 100 described with reference to FIG. 1 and the system described with reference to FIG. 2. In what follows, a control method for a mobile terminal according to one embodiment of the present invention and operation of the mobile terminal 100 implementing the control method will be described in detail with reference to related drawings.

With reference to FIG. 3, the controller 180 executes a message application S100. The controller 180 connects to a message server 210 through the wireless communication unit 110, executes the message application, and displays an execution screen of the message application on the display unit 151.

The message application can be downloaded from the message server 210 to the mobile terminal 100 and stored in the memory 160. The message application can be linked to a phone book installed in the mobile terminal 100. Accordingly, message correspondent information may be the same as the phone book or contact information.

The message correspondent may also provide a predetermined service in addition to contact information embedded in the mobile terminal 100. For example, in the case of an Internet shopping mall, the message correspondent can be implemented as a mobile application specific to the Internet shopping mall to be supplied to mobile terminal users, or a mobile application of the Internet shopping mall can be registered as the message correspondent.

According to one embodiment of the present invention, the Internet shopping mall can be set up as a message correspondent acting as a merchandise seller and can be registered as a friend in the message application. If the Internet shopping mall is registered as a friend, a user can purchase goods supplied by the Internet shopping mall through the message application.

The controller 180 can activate a payment function linked to the message application to carry out a predetermined payment operation in conjunction with the merchandise seller S110.

The controller 180, setting the merchandise seller as a message correspondent, cause displaying on the display unit 151 of a chat window for conversation with the merchandise seller S120.

At this time, an execution screen of the message application may include a soft key configured for activating a payment function. Also, the soft key may be displayed on the chat window.

The mobile terminal 100 according to one embodiment of the present invention, after carrying out a message function, can activate a payment function during the message function. In other words, the controller 180 can activate the payment function by receiving an input via the soft key.

Activating the payment function may indicate that payment can be processed while functions unique to the message application are being carried out by using a message application without separately entering account information or connecting to the Internet shopping mall. In order to carry out the payment function, a user has to have some amount of currency.

The currency may refer to actual currency held in the accounts maintained by ordinary financial institutions (for example, banks). Also, the currency may refer to a virtual currency provided by a message application.

Therefore, when the payment function is activated, a user authentication may be needed. The user authentication process may be replaced with a publicly known authentication process employed for conventional financial transactions.

According to the user's request, the controller 180 can transmit a purchase request for particular product among the goods that the merchandise seller provides to a message server 210. Accordingly, the controller 180 can post purchase information according to the purchase request on a chat window S130.

The purchase information may include at least product information, a price, purchase quantity, or a delivery address, but does not require entering account information separately. The purchase information may further include a remittance state check menu by which completion of payment can be checked. For example, after a purchase request is successfully received, a payment state is displayed on the chat window as "payment completed", "not paid" and the like so that a user can check whether payment for a product that he or she has requested to purchase has been completed.

In response to receiving an input for selecting the purchase information displayed on the chat window, the controller 180 can display a payment window on the display unit 151, S140. If the remittance state check menu included in the purchase information is selected, the controller 180 can display the payment window on the display unit 151.

The payment window includes at least one of balance information of a virtual currency charged through the message application, balance information of an account registered in a financial server, an amount of payment, or a payment execution button. Meanwhile, the payment window also does not have an area for receiving an account number of a purchaser as in the purchase information. This is because the message application already has financial account information of a user of the mobile terminal 100.

The controller 180 can receive the user's request for payment through the payment window. The controller 180 can display a payment result message according to the payment request on the chat window S150.

If payment is completed through the payment window, the remittance state check menu included in the purchase information is changed from "not paid" to "payment completed".

According to one embodiment of the present invention, if predetermined payment is completed through the message application, the controller 180 provides a delivery status in real-time so that the delivery process with respect to purchased goods can be monitored through the chat window.

If a payment request is received through the payment window, the controller 180 can request the user to conduct a predetermined authentication process. If the user enters authentication information properly according to the authentication process, the controller 180 can carry out a payment function.

As described above, the user can register his or her financial account opened in a financial institution in the message application beforehand so that the user can carry out the payment function.

Further, the controller 180 can conduct a group purchase with the message correspondent registered as described above through the message application during the purchase process. As described above, the controller 180 can receive an input for adding at least one message correspondent to the chat window to carry out a group purchase while the payment function linked to the message application as described above is activated. Receiving an input for adding a message correspondent to the chat window to carry out a group purchase is similar to a message application's adding at least one person into a message correspondent list to create a group chat room. Meanwhile, the controller 180 updates the purchase information based on the purchase quantity entered by the message correspondent which has participated in the group purchase and displays the updated purchase information.

Accordingly, the message correspondent participating in the group purchase can carry out a group purchase in a more convenient manner by using only a minimum amount of information including a purchase quantity and a delivery address through the message application without necessarily subscribing to the merchandise seller (the Internet shopping mall). A process of a group purchase according to one embodiment of the present invention will be described in detail later with reference to related drawings.

According to one embodiment of the present invention, a payment function may be carried out while a purchase process through the message application is being carried out; however, the present invention is not limited to the above. For example, when a user wants to remit payment to the message correspondent, the user can remit the payment more conveniently through the aforementioned payment system. Descriptions about this situation will be described later with reference to related drawings.

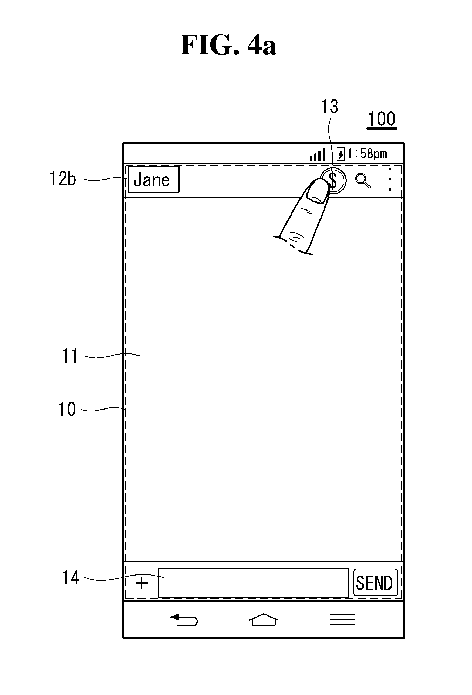

FIGs. 4a to 4d illustrate a remittance process using a message application according to an embodiment of the present invention.

With reference to FIG. 4a, the controller 180 executes a message application and causes displaying of an execution screen 10 of the message application on the touch screen or display 151.

The message application can be synchronized with a contact list stored in the mobile terminal 100, and anyone listed in the synchronized contact list can be a message correspondent.

The controller 180 can execute the message application by connecting to a predetermined message server 210 via the wireless communication unit 110. The message server 210 can be connected to the mobile terminal 100 through wireless communication.

Meanwhile, according to one embodiment of the present invention, the message application can be linked to a payment server 220 of a financial institution. Due to association with the payment server 220, the controller 180 can carry out a function related to financial payment through the message application without the mobile terminal 100 separately connecting to the payment server 220.

More specifically, the controller 180 executes a message application by connecting to a message server 210 and if an input for carrying out a payment function is received during execution of the message application, controls the message application so that it can be automatically linked to the payment server 220. Accordingly, the user can execute a predetermined function of financial payment through the execution screen of the message application.

For example, the execution screen 10 of the message application includes a soft key 13 for activating the payment function, and the controller 180 can activate the payment function if an input is received via the soft key 13. In what follows, the soft key 13 for activating the payment function will be called a payment icon 13.

The payment function includes a function of remitting payment to a message correspondent who shares the message application, a function of requesting the message correspondent to remit payment, and a function of receiving payment from the message correspondent with respect to the remittance request.

Meanwhile, a message correspondent according to one embodiment of the present invention may be a correspondent who shares a contact list with the mobile terminal 100 but uses a different mobile terminal or a merchandise seller who sells predetermined goods. For example, if a merchandise seller operating a market server becomes the message correspondent, the message correspondent can carry out financial transactions with the merchandise seller through the message application.

Meanwhile, it is preferable for the user of the mobile terminal 100 to possess a predetermined payment account (including a virtual account) in a predetermined financial institution that can be linked to the message application in order to carry out the payment function through the message application. Therefore, the user, by carrying out a process of associating the payment account beforehand with the message application, can carry out the payment function successfully through the message application.

According to one embodiment of the present invention, to carry out the payment function, the user of the mobile terminal 100 may possess a virtual currency that a message server 210 related to the message application provides instead of the currency that the financial institution provides. The virtual currency may be used as a distribution means or a payment means with which a predetermined amount of payment can be processed by using the message application. The virtual currency, after being charged through the message application, can be reduced each time a payment function is carried out through the message application. Therefore, the user may charge the virtual currency instantly as much as needed.

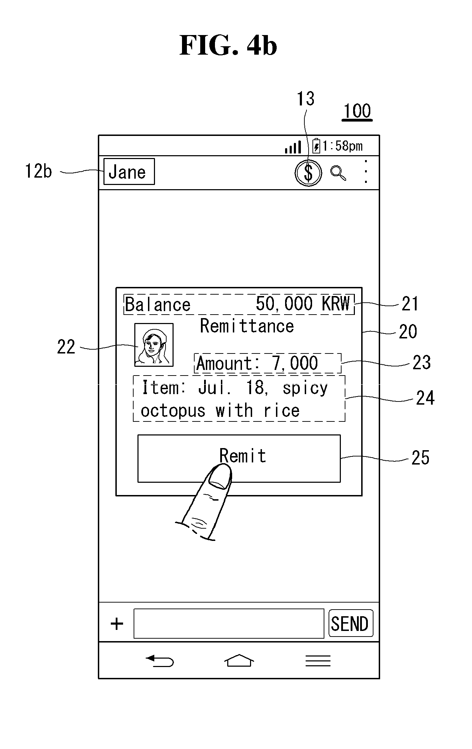

With reference to FIG. 4b, if a payment icon 13 is selected from FIG. 4a, a remittance setting window 20 configured for remitting payment to a message correspondent is displayed on the touch screen 151.

The remittance setting window 20 may include an amount of virtual currency 21 (hereinafter, it is called balance) that the user of the mobile terminal 100 possesses, a remittance receiver 22 corresponding to a message correspondent, an input area 23 for entering an amount of remittance, an input area for entering a message to be sent along with remittance 24, and a remittance button 25 for carrying out a remittance function based on the payment information set.

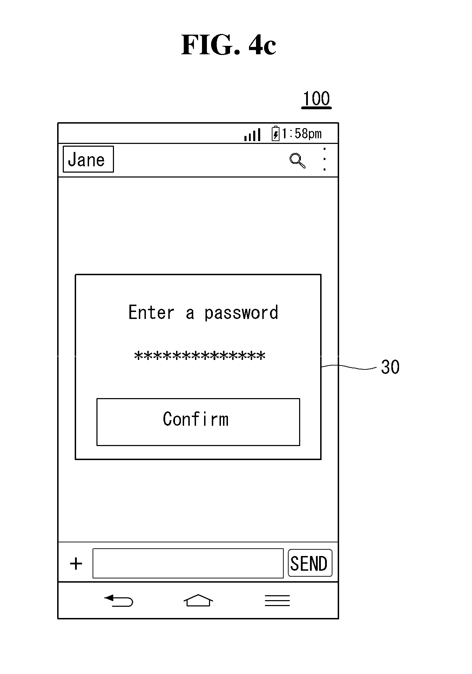

With reference to FIG. 4c, if the remittance button 25 is pressed, the controller 180 causes displaying on the touch screen 151 of a password input window 30 to carry out a simple authentication process (for example, entering a predetermined password).

Meanwhile, the authentication method of FIG. 4c is an illustrative example, and thus, the present invention is not limited to the above example. For example, in case a long touch input is applied on the remittance button 25 of FIG. 4b, the controller 180 recognizes the user's fingerprint and if the recognized fingerprint coincides with a pre-registered fingerprint pattern, proceeds with a remittance process without employing other authentication procedures except for a fingerprint authentication process.

Meanwhile, once the authentication process is completed, the message application connects to a financial server linked to a message server 210 and carries out a function of sending a predetermined remittance to a financial account of a message correspondent.

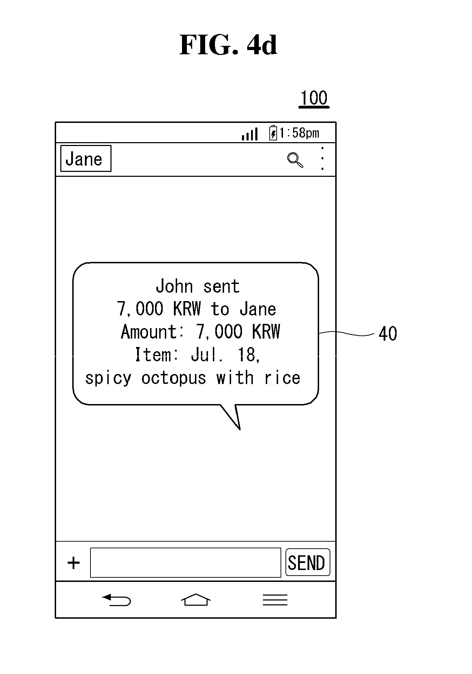

With reference to FIG. 4d, the controller 180 causes displaying of a remittance result on the chat window 11. A message 40 including the remittance result can be displayed on the chat window 11, where the remittance result may include a remitter, a remittance receiver, an amount of remittance, and a message related to the remittance.

According to one embodiment of the present invention, carrying out a payment function through the message application does not require an account number of a remitter and an account number of a remittance receiver at all. In other words, in order to carry out a financial function such as payment and remittance through a message application, it is preferable to register beforehand an account of a financial institution that a message correspondent possesses in the message application or to assume that the message correspondent also possesses a virtual account that the message server 210 provides.

According to one embodiment of the present invention, a plurality of message correspondents can be set as a group when the message application is carried out. Accordingly, the controller 180 can carry out a payment function that remits payment to each of the plurality of message correspondents through an execution screen of the message application.

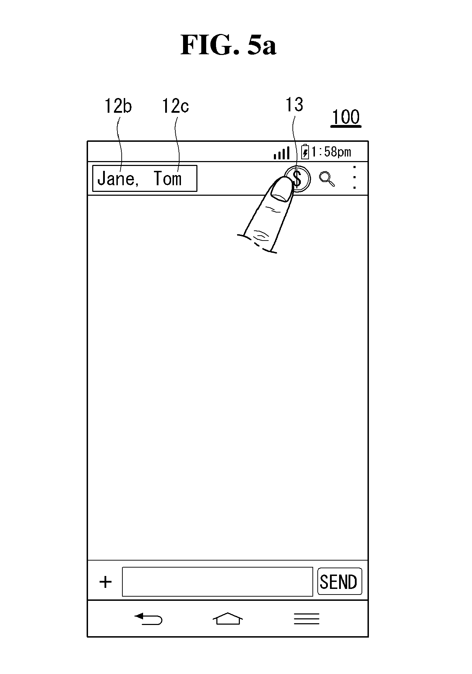

FIGs. 5a to 5d illustrate a process of remitting payment to a plurality of message correspondents through a message application.

With reference to FIG. 5a, a plurality of message correspondents 12b, 12c participating in a message function is displayed on the execution screen of the message application. An input for selecting a payment icon 13 can be received from the execution screen.

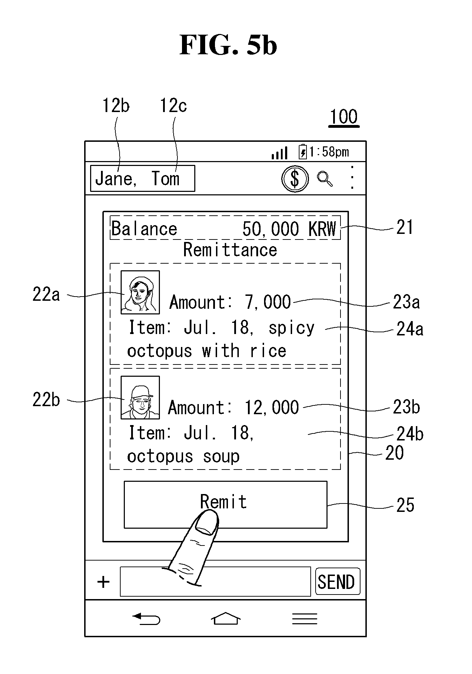

With reference to FIG. 5b, the controller 180 causes displaying on the touch screen 151 of a remittance setting window 20 meant for remitting payment to the plurality of message correspondents 12b, 12c. Therefore, as described above, the remittance setting window 20 can include balance information 21, a first remittance receiver information 22a, an input area 23a for entering an amount of remittance to be sent to the first remittance receiver, a second remittance receiver information 22b, an input area 23b for entering an amount of remittance to be sent to the second remittance receiver, an input area for entering a remittance-related message 24a, 24b, and a remittance button 25.

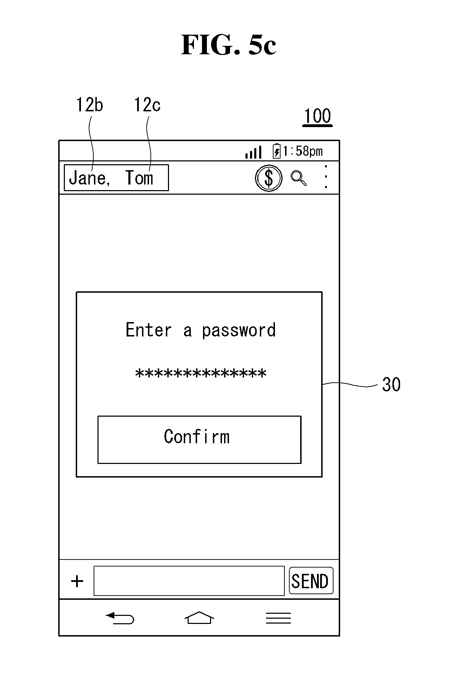

With reference to FIG. 5c, if the remittance button 25 is selected, the controller 180 causes displaying on the touch screen 151 of a password input window 30 used for an authentication procedure and if a pre-registered password coincides with an input password, carries out remittance of payment to the message correspondent 12b, 12c based on the content entered into the remittance setting window 20.

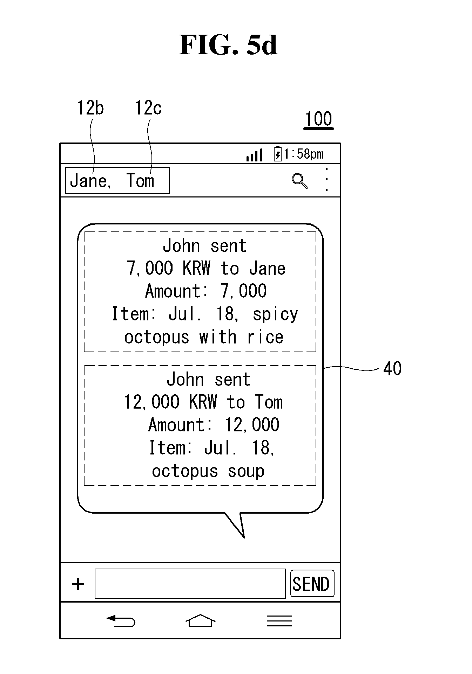

With reference to FIG. 5d, if remittance is carried out successfully, a result window 40 informing a remittance result can be displayed on a group chat window.

Therefore, according to one embodiment of the present invention, it is possible to realize a function of remitting payment to a message correspondent without providing payment account information of the message correspondent.

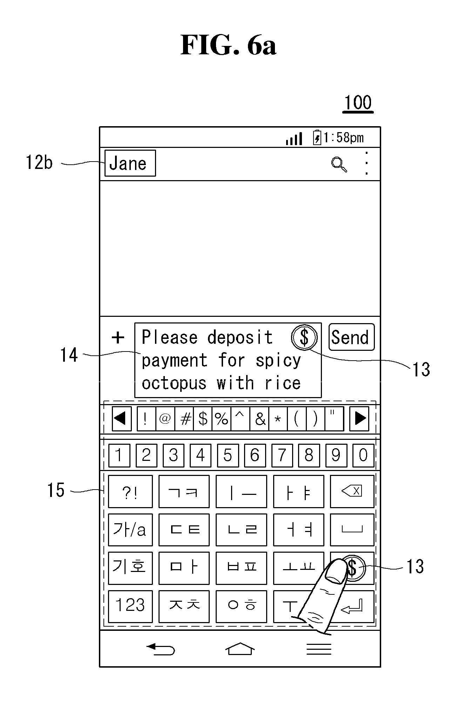

FIGs. 6a to 6c illustrate an example of requesting a message correspondent to remit payment.

With reference to FIG. 6a, the controller 180 sets up a message correspondent 12b and causes displaying of a message execution screen on the touch screen 151. The message execution screen can further display a keypad 15 for entering a message. A user can enter a predetermined message via the keypad 15 so that the message entered into the message input window 14 is displayed. Further, a payment icon 13 may be displayed at some keys of the keypad 15. Furthermore, the payment icon 13 may also be additionally displayed on the message input window 14.

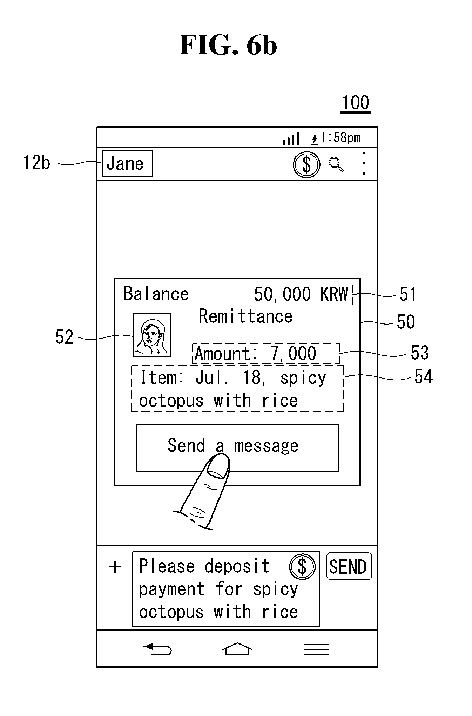

With reference to FIG. 6b, if an input for selecting the payment icon 13 is received after a message input is completed, the controller 180 causes displaying on the touch screen 151 of a setting window 50 for requesting remittance along with the input message.

The setting window 50 for requesting remittance may include balance information 51, message correspondent information 52, an input area for an amount of remittance 53, and an editing area for a related message 54.

According to one embodiment of the present invention, transmitting a remittance request message in the form of an ordinary message during execution of a message application is quite different from transmitting a remittance request after activating a payment function via a payment icon displayed on a message execution screen. In other words, in the former case, the message correspondent merely receives a message and is not able to carry out a payment function immediately via a chat window. In the latter case, however, if the message correspondent receives the remittance request message, payment can be processed immediately through a simple operation within the chat window where the remittance request message is displayed.

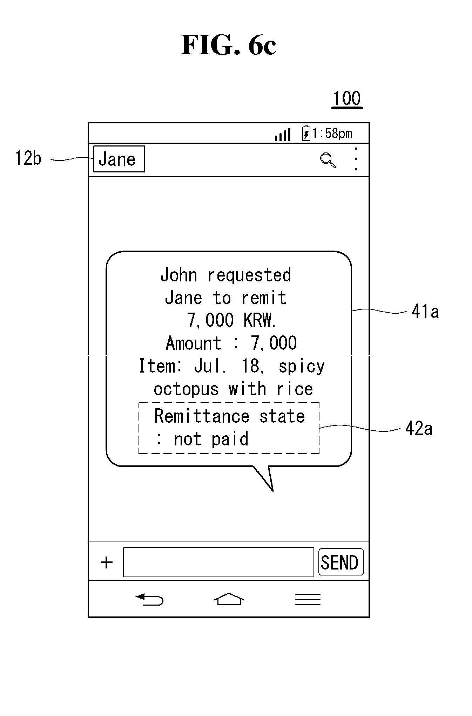

With reference to FIG. 6c, in case remittance is requested via the setting window 50 for requesting remittance (a request message is transmitted), a remittance request message 41a is displayed on the chat window, and the remittance request message 41a may include a remittance state check menu 42a.

The remittance state check menu 42a defines the remittance state of a message correspondent as "not paid" or "payment completed" so that a user can check the remittance state of the message correspondent in real-time through a current chat window. If the message correspondent completes remittance, the remittance state menu 42a changes from "not paid" to "payment completed."

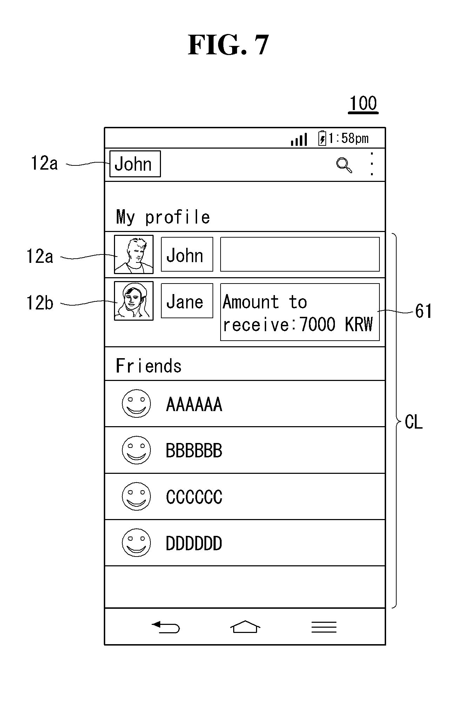

FIG. 7 illustrates an example where a payment function is displayed being linked to a list of message correspondents.

With reference to FIG. 7, a message application, being linked to a contact list of a mobile terminal 100, provides a message correspondent list (CL). As described with reference to FIGs. 6a to 6c, if the user of the mobile terminal 100 activates a payment function of the message application and transmits a remittance request message, details of the remittance request can be displayed together in the message correspondent list (CL). For example, in case Jane 12b is requested for remittance, remittance request information 61 can be displayed in the list corresponding to Jane among the message correspondent list (CL).

Accordingly, by checking the message correspondent list (CL), the user of the mobile terminal 100 can check in real-time as to whether a person who has received a remittance request carried out remittance. If the message correspondent has remitted payment, the remittance request information 61 displayed in the message correspondent list (CL) can be updated. For example, the remittance request information 61 can be displayed as "payment completed" or disappear from the message correspondent list (CL).

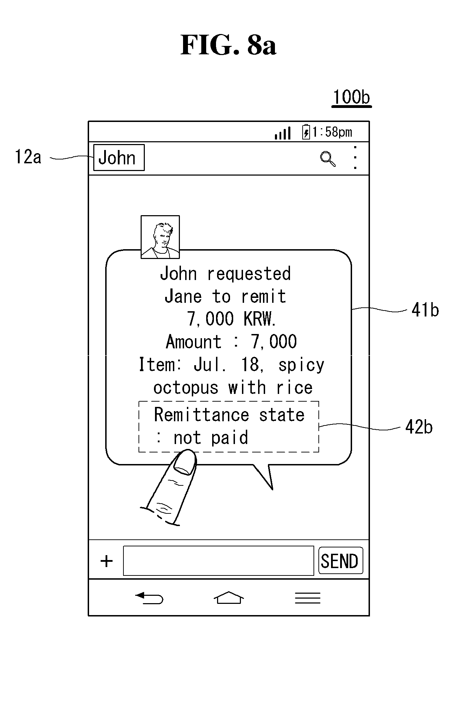

FIGs. 8a to 8c illustrate a process of remitting payment through a message application after a request for remittance is received.

FIG. 8a shows a screen of a terminal used by a person who has received a remittance request as described in FIGs. 6a to 6c. With reference to FIG. 8a, if a remittance request is received while a message function is carried out, a remittance request message 41b is displayed on a chat window, and a remittance state check menu 42b can be displayed together in the remittance request message 41b.

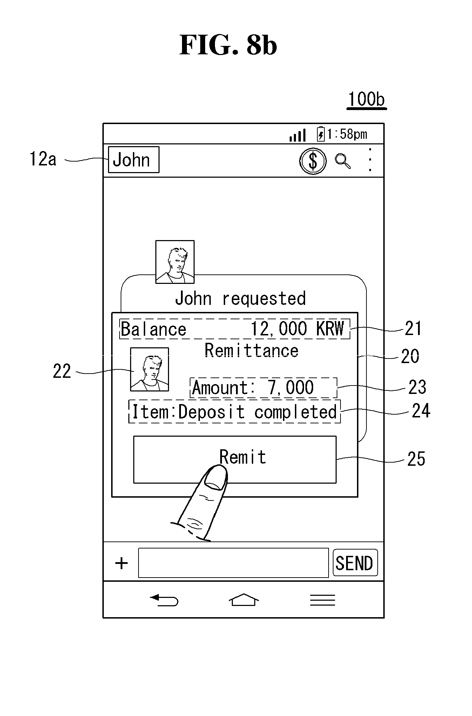

With reference to FIG. 8b, if an input for selecting the remittance state check menu 42b is received, the controller 180 causes displaying of a remittance information input window 20 on the touch screen 151 so that remittance can be carried out during execution of the message application. The remittance information input window 20 can include balance information 21, remittance requester information 22, an amount of remittance 23, and an editing area for a remittance-related message 24. The amount of remittance can be entered automatically based on a remittance request message.

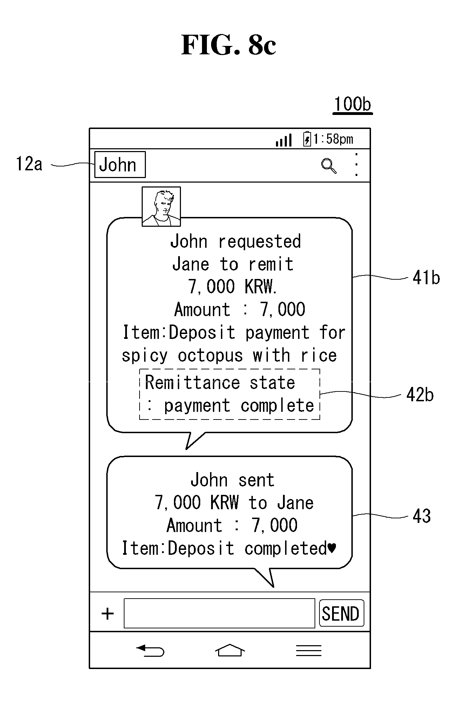

With reference to FIG. 8c, if a remittance menu is selected from the remittance information input window 20, the controller 180 can carry out a process of remitting payment to a message correspondent. If remittance is completed, a message notifying of completion of remittance 43 can be displayed on a chat window. In the same manner, a predetermined authentication procedure can be carried out before remittance.

Meanwhile, if remittance is completed, the remittance state check menu 42b included in the remittance request message 41b displayed within the chat window can be changed from "not paid" to "payment completed."

Up to this point, this document has described examples where a user carries out financial transactions by remitting payment to a message correspondent via a message execution screen and requesting to remit payment without connecting to a separate financial site during execution of the message application.

In what follows, described will be an example where a product exchange with a message correspondent is carried out during execution of a message application.

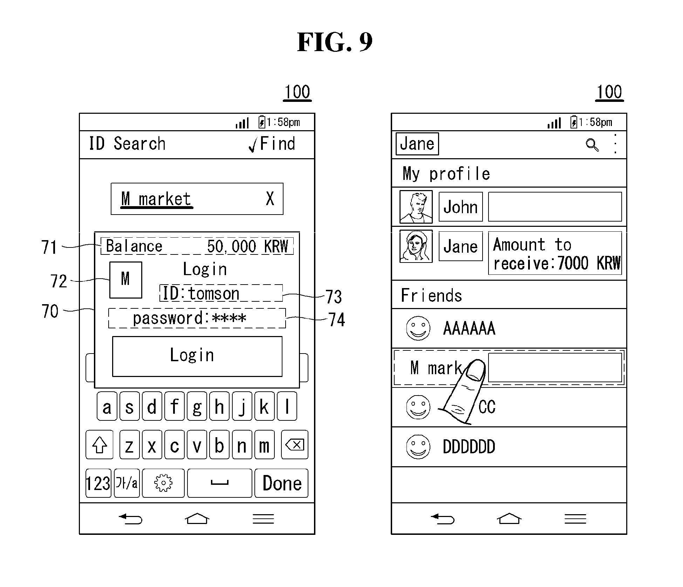

FIG. 9 illustrates a process of registering a merchandise seller as a message correspondent.

With reference to FIG. 9, a contact list of the mobile terminal 100 is linked to a message application so that the contact list can be message correspondent information. If a merchandise select is not found in the contact list, the merchandise seller can be newly registered as a message correspondent.

With reference to FIG. 9, the merchandise seller information can be obtained through an ID search process. If an ID corresponding to the merchandise seller is found, a predetermined authentication procedure may be needed to register the merchandise seller as a message correspondent.

The controller 180 provides an authentication window 70 for registering the merchandise seller as a message correspondent. The authentication window 70 may include balance information 71, an icon 72 by which the merchandise seller can be identified, an ID input area 73, and a password input area 74.

Meanwhile, if a merchandise seller is registered as a message correspondent, the controller 180 causes displaying of the merchandise seller information in a message correspondent list (CL). In what follows, the merchandise seller newly registered as a message correspondent will be referred to as an "Internet shopping mall".

So, from now on, described will be an example of carrying out a predetermined payment function with the Internet shopping mall as a message correspondent.

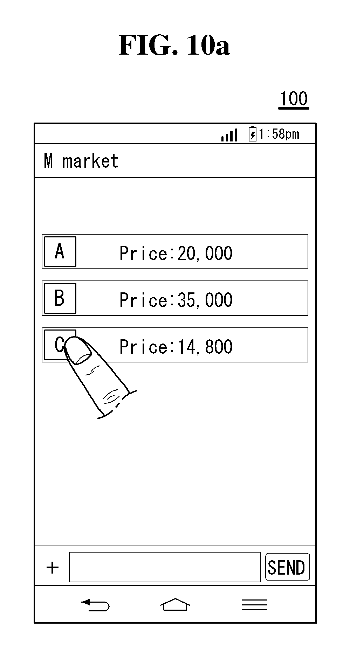

FIGs. 10a to 10c illustrate a process of carrying out payment for goods during execution of a message application.

With reference to FIG. 10a, the "Internet shopping mall" is registered as a message correspondent, and the controller 180 receives an input for selecting the "Internet shopping mall" as a chat partner. The controller 180 may cause displaying on the touch screen 151 of a chat window for conversation with the Internet shopping mall or product information provided by the Internet shopping mall. Afterwards, the controller 180 can receive an input for selecting a particular product (a product to purchase) from among the product information.

The product information may be provided as part of the chat window, or a window corresponding to the Internet shopping mall may be provided to the touch screen 151 separately from the chat window. A method for providing information of goods supplied by an Internet shopping mall while the message function is being carried out is not limited to the example described above, but can be realized in various other forms.

For example, in case a user enters product information that the user wants to purchase by carrying out a search function via a chat window linked to the Internet shopping mall, related products may be displayed on the chat window.

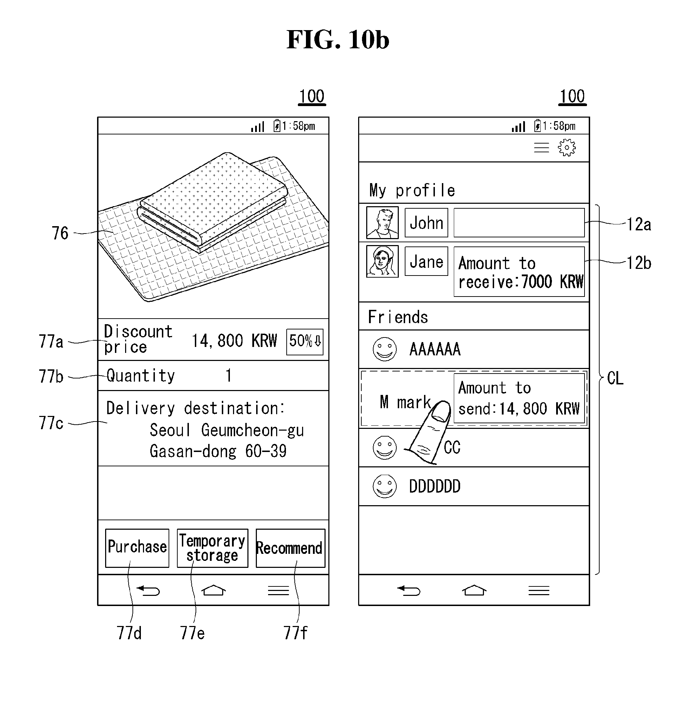

With reference to FIG. 10b, the controller 180 causes displaying on the touch screen 151 of a screen for entering purchase information of the selected particular product. The purchase information may include product information 76, price information 77a, a purchase quantity 77b, and a delivery address 77c. The user may enter the purchase information. With respect to the purchase information, a purchase menu 77d for direct purchase of the corresponding product, a temporary storage menu 77e for temporarily storing input purchase information, and a recommendation menu 77f for recommending the corresponding product to other message correspondents can be displayed together on the touch screen 151.

If the purchase menu 77d is selected after purchase information is entered, the controller 180 causes displaying of payment information of a product that the user decided to purchase from the Internet shopping mall on the message correspondent list (CL) in the form of a tag.

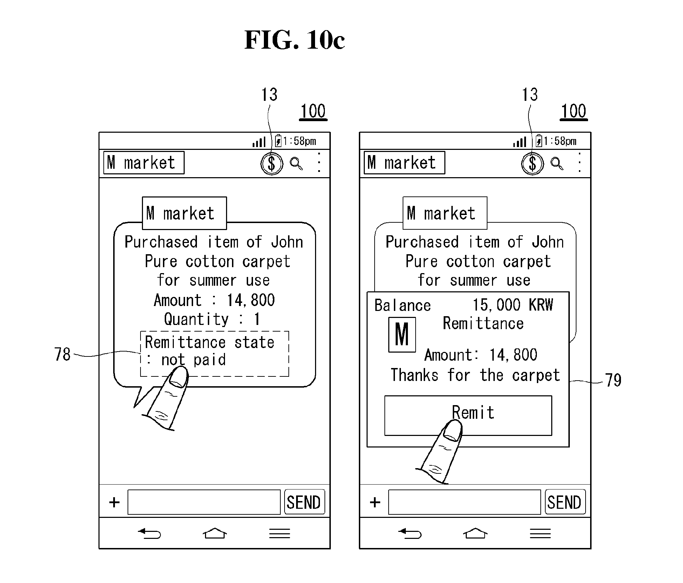

With reference to FIG. 10c, if the user selects the purchase menu 77d, the controller 180 causes displaying of purchase information on the chat window. Or if the user selects the Internet shopping mall from the message correspondent list while payment information of the product that the user has decided to purchase is displayed on the message correspondent list (CL) in the form of a tag, the controller 180 may cause displaying of the purchase information on the chat window.

The payment information displayed on the chat window may include a remittance state check menu 78; if the remittance state check menu 78 is selected, the controller 180 controls the remittance setting window 79 so that it can be displayed on the touch screen 151 in the form of a pop-up window. The remittance setting window 79 is used as described with reference to FIG. 4b

Meanwhile, if remittance to the Internet shopping mall is completed via the remittance setting window 79, the state of the remittance state check menu 78 can be changed from "not paid" to "payment completed" as described above.

According to the embodiment described above, the user can carry out payment for a product that he or she wants to buy in a convenient manner without having to connect to a separate financial site and to enter information about a payment means (account number, credit card number, and the like) to purchase the product. In other words, a merchandise seller being registered as a message correspondent, the user can carry out payment in a simple manner by selecting only a minimum amount of information such as a desired product, a purchase quantity, and a delivery address through a message application.

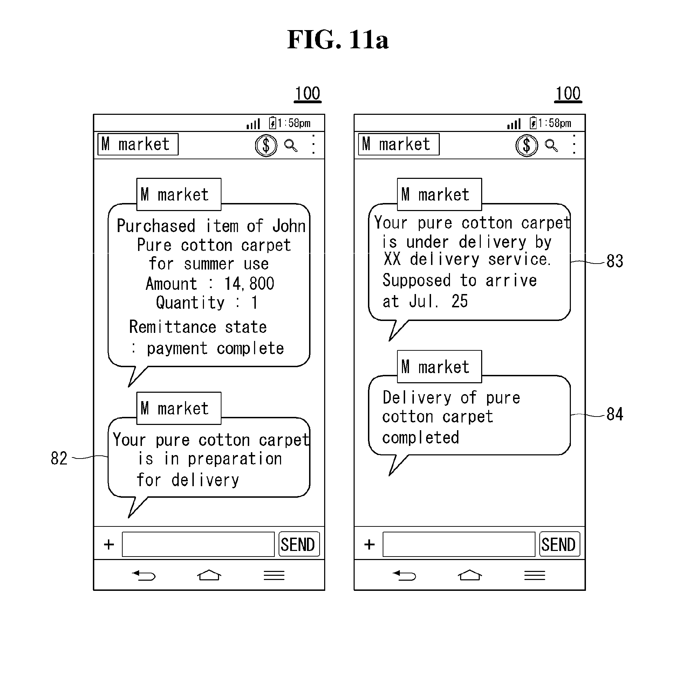

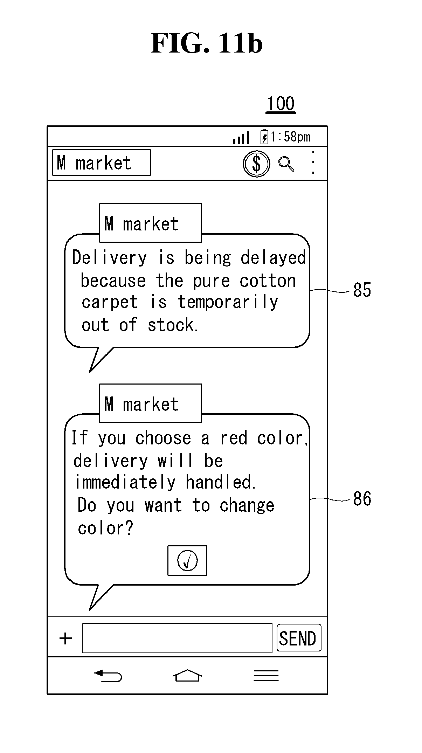

FIGs. 11a and 11b illustrate an example of monitoring a delivery status of purchased goods through a message application.

With reference to FIG. 11a, if remittance is completed, the controller 180 causes displaying of a delivery status of a purchased product in real-time on a chat window. The controller 180 updates a message 82, 83, 84 informing about whether a purchased product is under delivery, estimated delivery time, and whether delivery has been completed; and causes displaying of the updated message on the chat window.

With reference to FIG. 11b, the controller 180 causes displaying of a delivery delay message 85 on the chat window if delivery is delayed due to a shortage of goods in stock. Also, if a purchase condition is changed, the controller 180 further causes displaying on the chat window of a message 86 informing that the corresponding product can be delivered immediately.

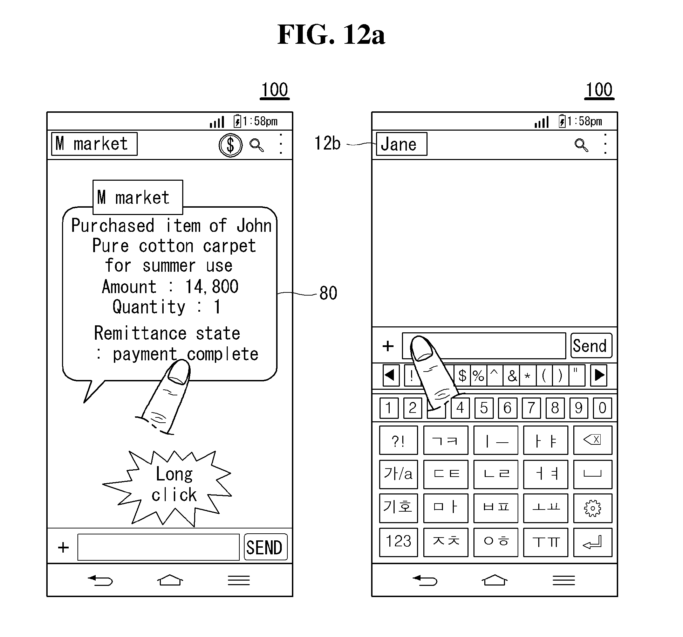

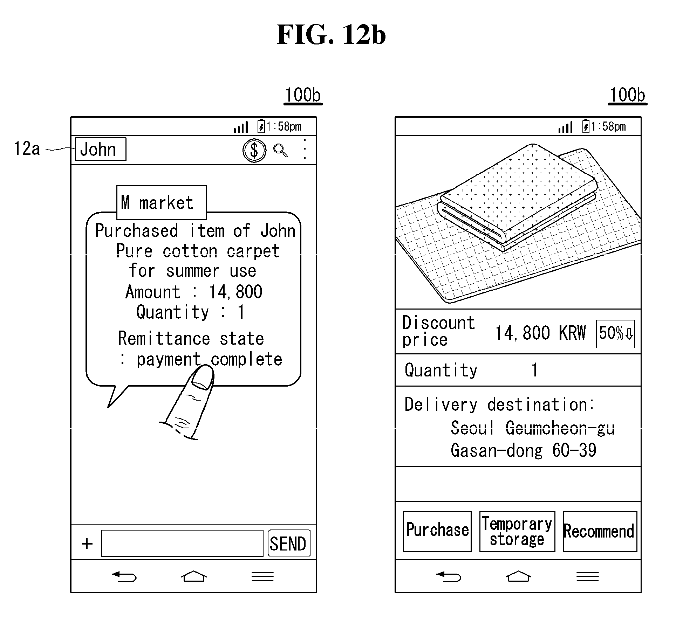

FIGs. 12a and 12b illustrate an example of recommending purchased goods to friends.

With reference to FIGs. 12a and 12b, the controller 180 causes transmission of a purchase result message 80 to other message correspondents. The purchase result message 80 can be delivered with the URL of the Internet shopping mall being linked thereto. If a mobile terminal 100b of the other message correspondent (a different mobile terminal) which has received the purchase result message 80 receives an input for selecting the received purchase result message, information of the purchased product and a page showing the purchase information can be displayed on a screen of the different mobile terminal 100b based on the URL address linked.

In what follows, described will be an example of purchasing goods together with a plurality of message correspondents through a message application according to one embodiment of the present invention.

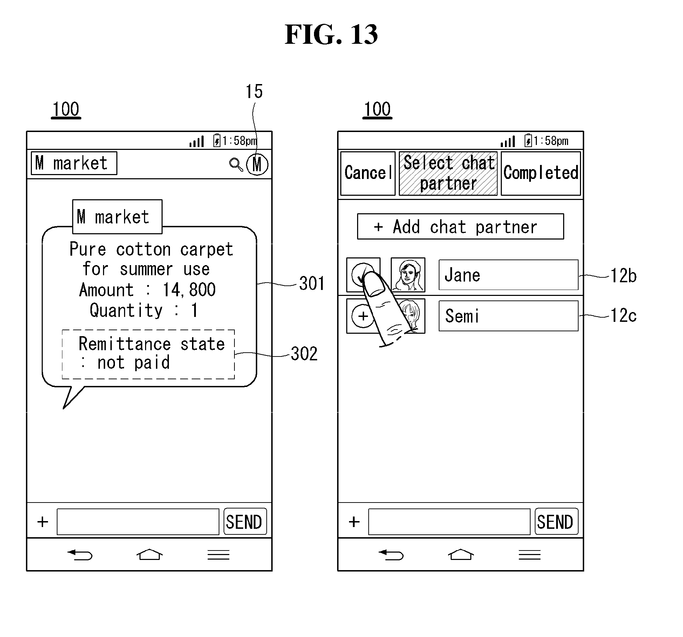

FIGs. 13, 14a to 14c, 15a to 15d, 16a to 16c, and 17a to 17e illustrate a process of group purchase with a plurality of message correspondents through a message application according to one embodiment of the present invention.

In what follows, mobile terminals of message correspondents participating in a group purchase will be referred to as 100b, 100c, and 100d; the mobile terminals 100b, 100c, 100d of the message correspondents are assumed to perform the same functions of the mobile terminal 100 according to one embodiment of the present invention. In particular, controllers of those mobile terminals belonging to the message correspondents are assumed to carry out the same function as the controller 180 of the mobile terminal 100 according to one embodiment of the present invention.

With reference to FIG. 13, the controller 180, after carrying out a message application, can complete a predetermined purchase request by associating a payment function with the message application. After the purchase request is completed, the controller 180 causes displaying of a purchase request result message 301 on a chat window. While the remittance state is "not paid", the controller 180 may add Jane 12b as a chat partner if the controller 180 receives an input for selecting a menu 15 displayed on an execution screen of the message application.

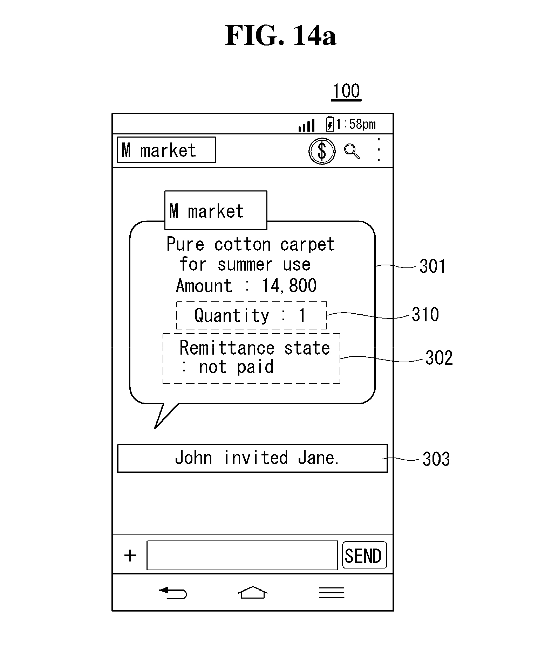

With reference to FIG. 14a, in case another person (e.g., Jane 12b) who will join a group purchase is added to a chat window while a purchase request result message 301 is displayed on the chat window, the controller 180 causes displaying on the chat window of a message 303 informing that a message correspondent has been added.

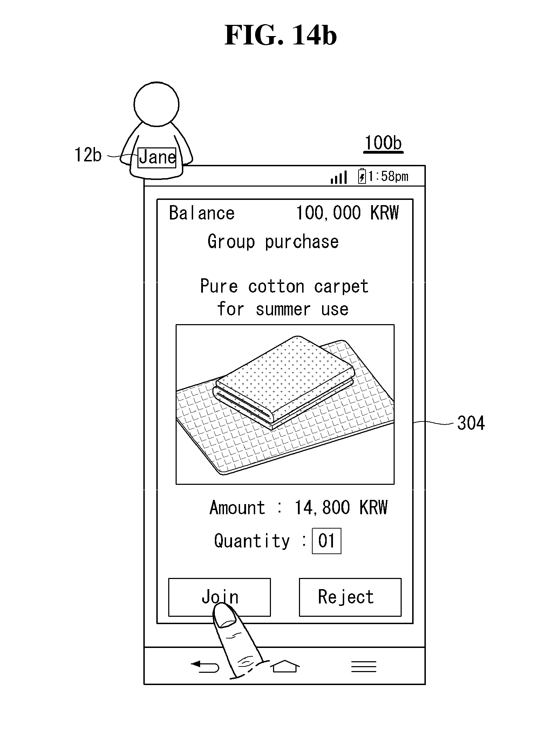

With reference to FIG. 14b, as the user of the mobile terminal 100 organizes the group purchase and opens a chat window for an online shopping mall (e.g., Market 75), the organizer can purchase predetermined goods by sending and receiving a message to and from the online shopping mall via the chat window. In other words, as described above, after a message function is completed, the operation above can be carried out while a payment function is activated.

In particular, if the organizer invites another person while the payment function is activated, the controller 180 interprets the invitation as a request for the person to participate in the group purchase. As shown in FIG. 14b, the chat window for an invited person may provide an inquiry window 304 through which the invited person can choose whether to accept the invitation for the group purchase. Via the inquiry window 304, the invited person can also enter a purchase quantity. It should also be noted that the invitation for a group purchase may be turned down via the inquiry window 304.

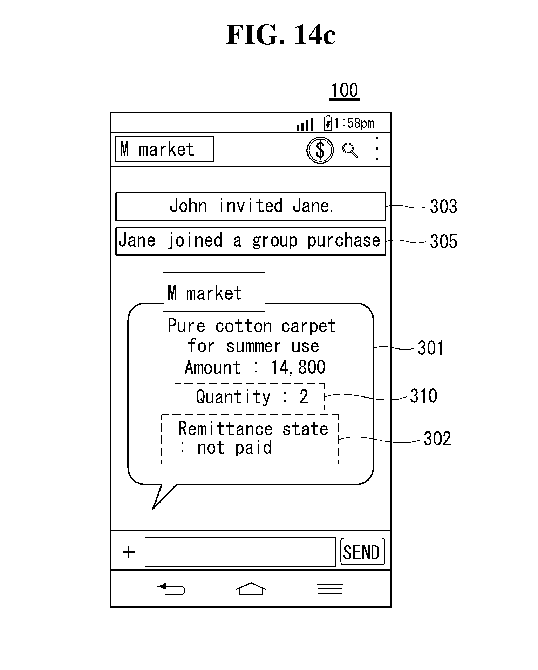

With reference to FIG. 14c, if an input for participating in a group purchase is received via the inquiry window 304, the controller 180 causes displaying on the chat window of a message 305 informing of a new message correspondent's participation in the group purchase and a purchase request result message 301 with an updated group purchase quantity. In the example, since all of the organizer and participants of the group purchase have not carried out payment yet, the remittance state check menu 302 is displayed as "not paid."

Meanwhile, according to one embodiment of the present invention, one can notice that a group purchase is under way through a message application, if a payment function is activated, an online shopping mall is set up as a chat partner, and a chat window for the group purchase is established during execution of a message function.

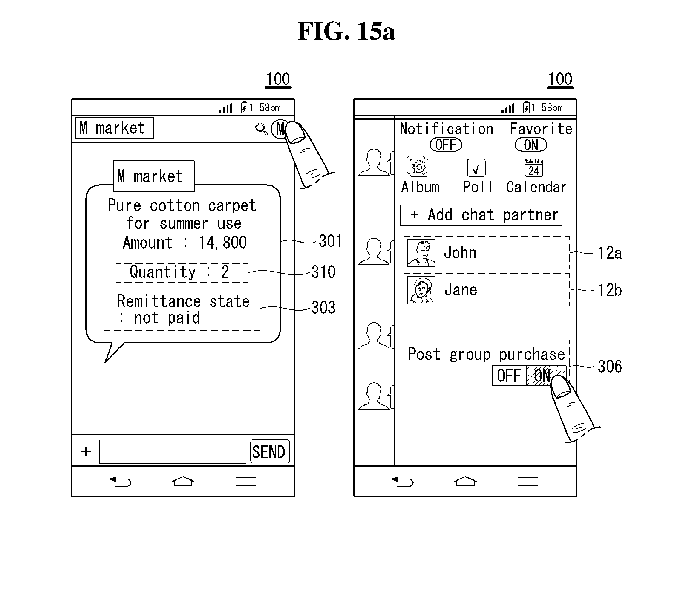

FIGs. 15a to 15d illustrate a process of inviting people for group purchase through a message application.

With reference to FIG. 15a, if a message application is carried out, a payment function is activated, and a purchase request for a predetermined product is completed, a purchase request message 301 can be displayed on a chat window.

Next, in case an input for selecting a menu icon 151 displayed on the execution screen of the message application is received, a buddy list can be displayed on the touch screen 151. Also, if a person is added to the buddy list while a payment list is activated, the person is invited to join a group purchase.

With reference to FIG. 15a, it can be noted that John 12a, who created a chat room and Jane 12b who joined the chat room currently participate in a group purchase. While participants who are joining the group purchase are displayed, a group purchase post function can be activated via a notification button 306.

In other words, by activating the group purchase post function, the controller 180 can invite message users to join a group purchase.

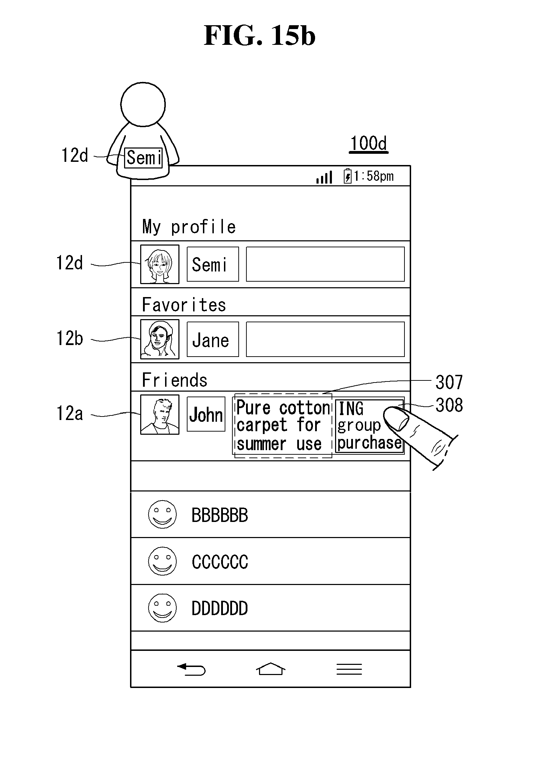

FIG. 15b shows a screen of a mobile terminal 100d of one of chat partners included in a message list. With reference to FIG. 15b, while a message correspondent list is displayed on the display unit of the mobile terminal 100d, an indicator 307, 308 may be displayed to notify a group purchase organizer that a group purchase posting is in progress.

The indicator may include an icon 308 showing a group purchase title 307 and that a group purchase is in progress.

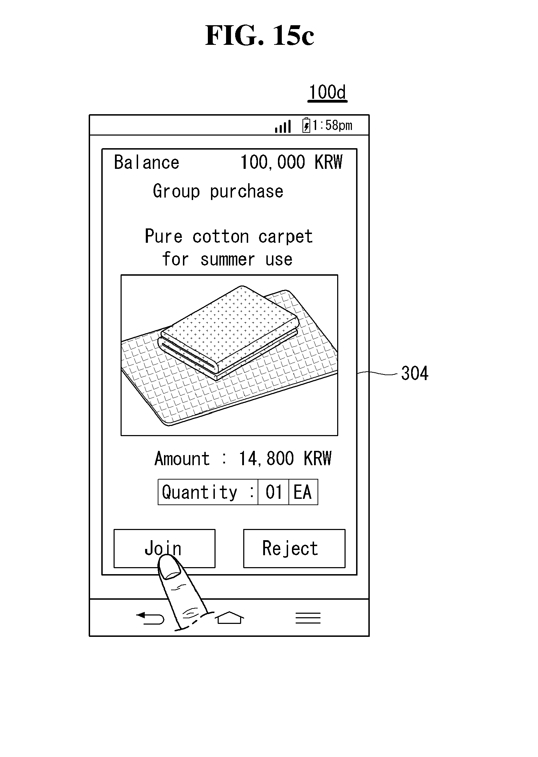

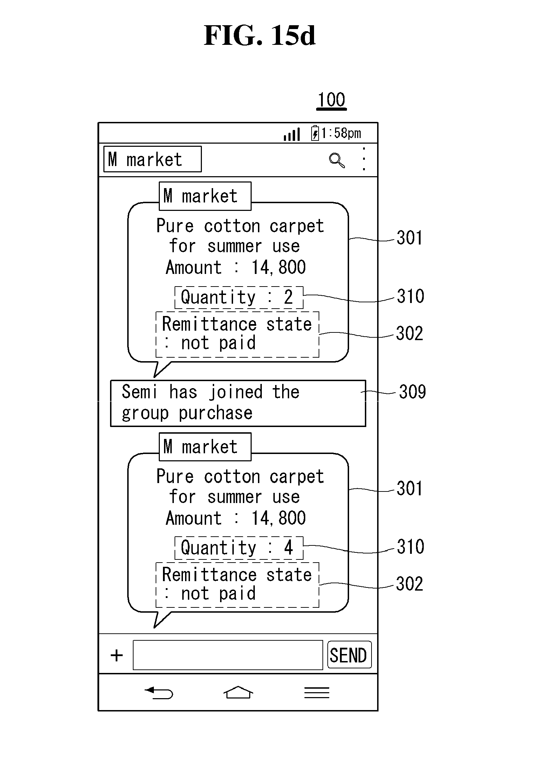

As shown in FIG. 15c, if the icon 308 is selected from the screen of the mobile terminal 100d, a pop-up window 304 through which the user can determine whether to join a group purchase is displayed. Via the pop-up window, the user can also enter the purchase quantity of a product. As shown in FIG. 15d, if the user of the mobile terminal 100d presses a join button, the controller 180 of the mobile terminal 100 causes displaying on the chat window of a message 309 notifying that a group purchase participant has been added. Also, the controller 180 can update the total quantity of purchase 310 based on the purchase quantity of participants and cause displaying of the updated total quantity of purchase on the chat window.

Accordingly, people joining the group purchase can monitor information of group purchase participants, information of group purchase quantity, and so on via one message chat window in real-time.

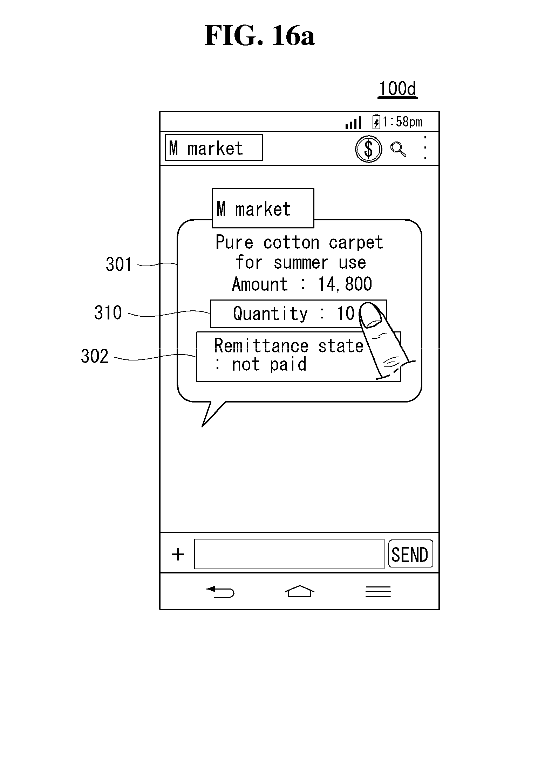

FIGs. 16a to 16c illustrate an example of changing a group purchase quantity through a message application.

With reference to FIG. 16a, the controller 180 of the mobile terminal 100 causes displaying of a group purchase request result 301 on a chat window. As described above, the group purchase request result message 301 may include a purchase quantity menu 310. Since the group purchase request result message 301 is open to all of the group purchase participants joining a chat, each participant may check his or her purchase quantity by selecting the purchase quantity menu 310 and change the purchase quantity if needed.

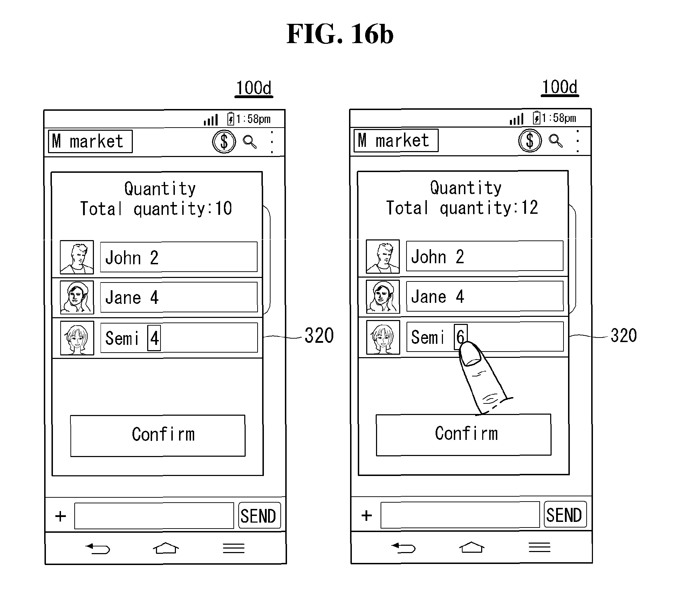

With reference to FIG. 16b, the controller of the mobile terminal 100d displays purchase quantities 320 of individual group purchase participants on the chat window as the purchase quantity menu 310 is selected. Participants can change their purchase quantity from among the purchase quantity information 320. At this time, the controller of the mobile terminal 100d may display purchase quantity information of other people as deactivated so that edition of purchase quantity information of other participants for the group purchase is blocked for all but the user of the mobile terminal 100d.

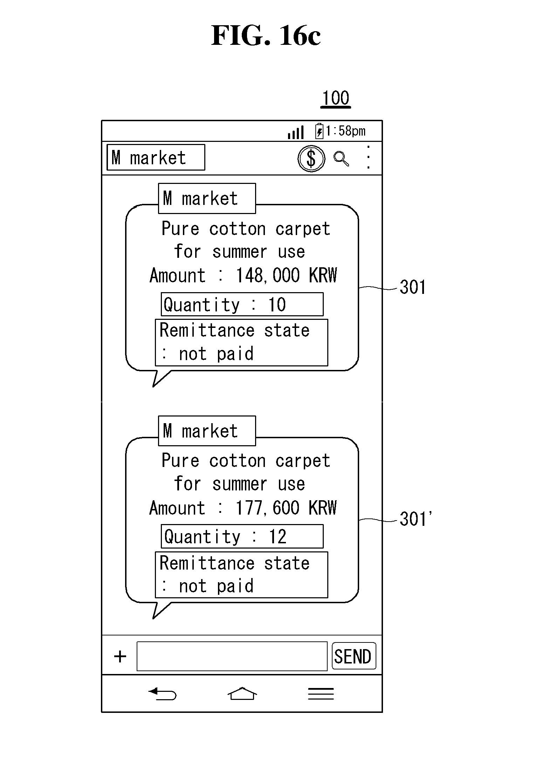

With reference to FIG. 16c, the controller 180 updates a purchase request result message 301 by reflecting the changed purchase quantity and causes displaying of the updated purchase request result message 301' on the chat window. FIG. 16c shows a screen of a mobile terminal belonging to a group purchase organizer.

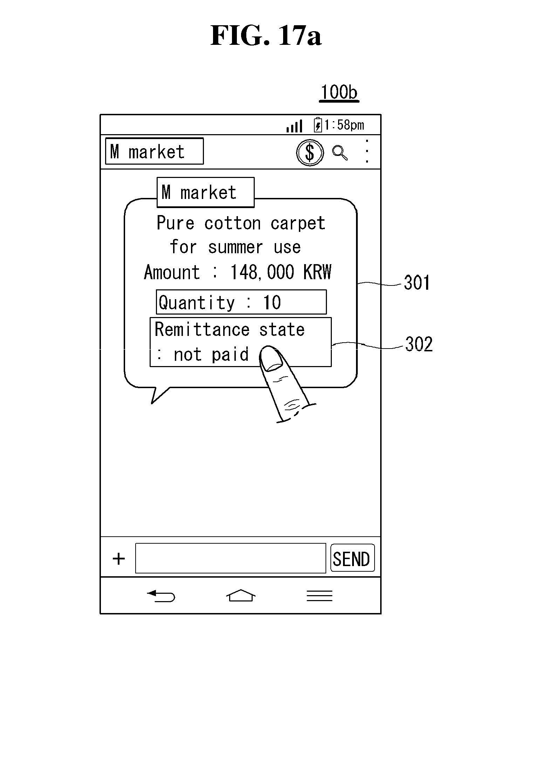

FIGs. 17a to 17e are screen examples where payment for group purchase is carried out through a message application.

FIG. 17a illustrates an example where payment is carried out in a mobile terminal 100b belonging to a participant (e.g., Jane, 12b) of a group purchase rather than the organizer thereof. As described above, the purchase request result message 301 includes a remittance state check menu 302 and is displayed as "payment completed" or "not paid" depending on a payment state.

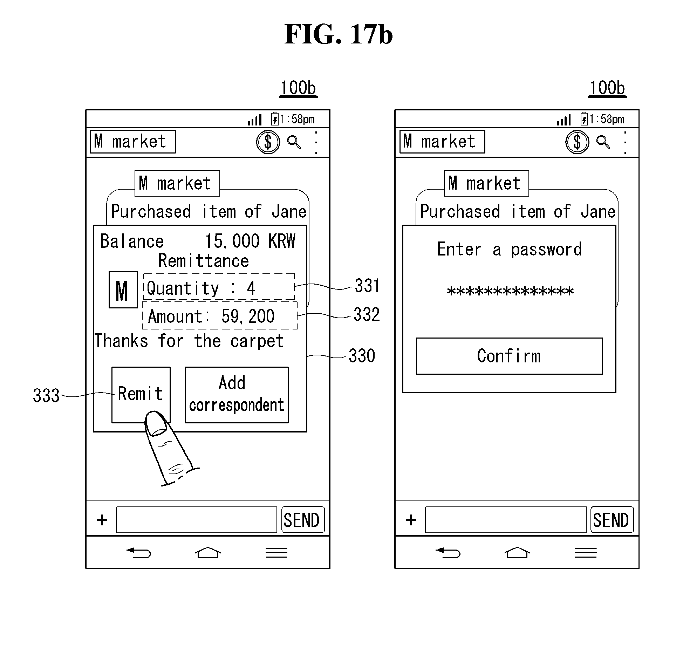

If the remittance state check menu 302 is selected, the controller of the mobile terminal causes displaying of a payment window 330 on a message chat window as shown in FIG. 17b. For example, the payment window 330 may include balance information 331, an amount of payment 332, and a remittance button 333.

If an input for the remittance button 333 is received, the controller of the mobile terminal 100b causes displaying of an authentication window on the display unit and if authentication information is received via the authentication window, remits the payment. At this time, the remittance receiver may be an Internet shopping mall which is a group purchase correspondent.

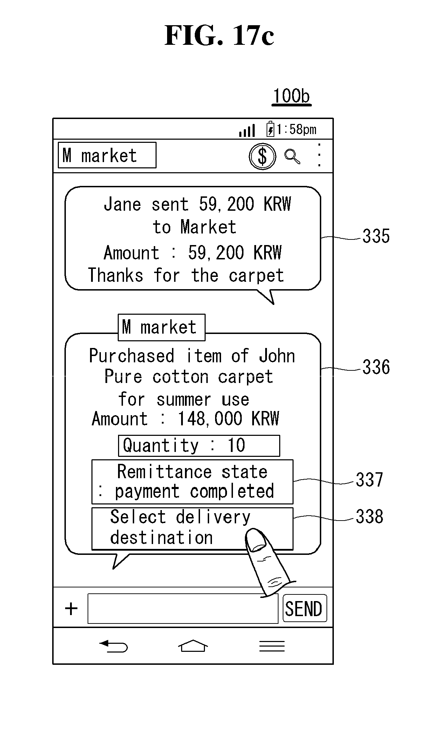

With reference to FIG. 17c, the mobile terminal 100b can display on the chat window a result message 335 with respect to the remittance carried out by the user of the mobile terminal 100b. Also, the mobile terminal 100b can display on the chat window an updated purchase request result message 336. The updated purchase request result message 336 may include an updated remittance state check menu 337 and a delivery destination selection menu 338.

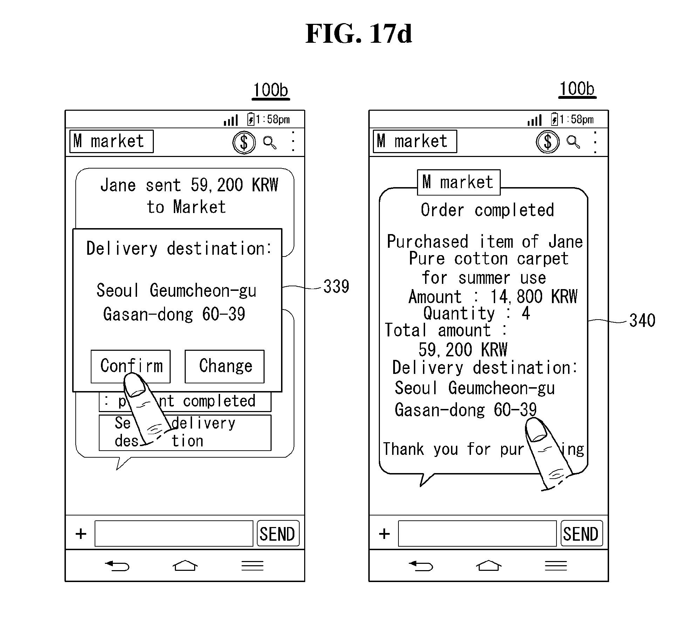

With reference to FIG. 17d, the mobile terminal 100b displays a delivery destination input window 339 on the display unit as a delivery destination selection menu 338 is selected. If the delivery destination information is obtained, the mobile terminal 100b displays an order complete message 340 on the chat window.

FIGs. 17a to 17d illustrate a process where a group purchase participant rather than an organizer of the corresponding group purchase uses a messenger application in the participant's mobile terminal to carry out payment individually and to receive order details. However, it should be noted that the payment transactions carried out individually by the group purchase participants can be shared among all of the group purchase participants joining the chat.

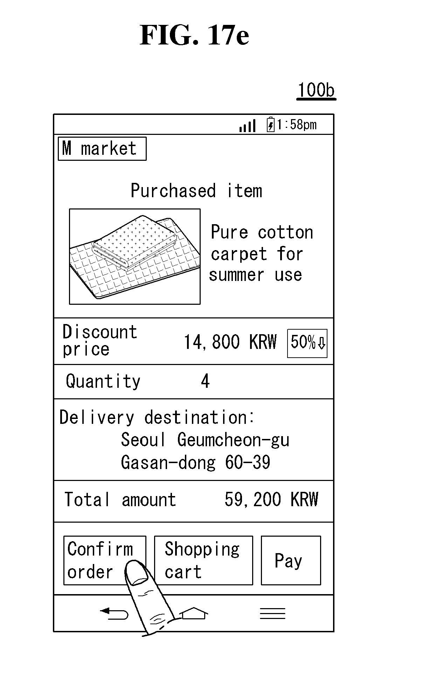

Meanwhile, wWith reference to FIG. 17e, if an order complete message 340 is selected from the screen of FIG. 17d, the controller of the mobile terminal 100b executes a market application corresponding to a merchandise seller and causes displaying of the application on the display unit. The execution screen of the market application may include purchase details check information.

On the other hand, according to one embodiment of the present invention, after the message application is carried out, a payment function may be activated, and purchase of goods can be carried out. And according to one embodiment of the present invention, a user can complete a predetermined purchase procedure by using only the information that does not require personal information, such as a purchase quantity and a delivery destination, without entering separate payment account information into the message chat window. This type of payment is possible without separate account information once a buyer possesses a virtual currency that a merchandise seller or a message application provides and/or accepts.

However, according to one embodiment of the present invention, even when the buyer does not separately possess a virtual currency provided by the merchandise seller or the message application, he or she may carry out payment through a mobile payment application after executing the mobile payment application.

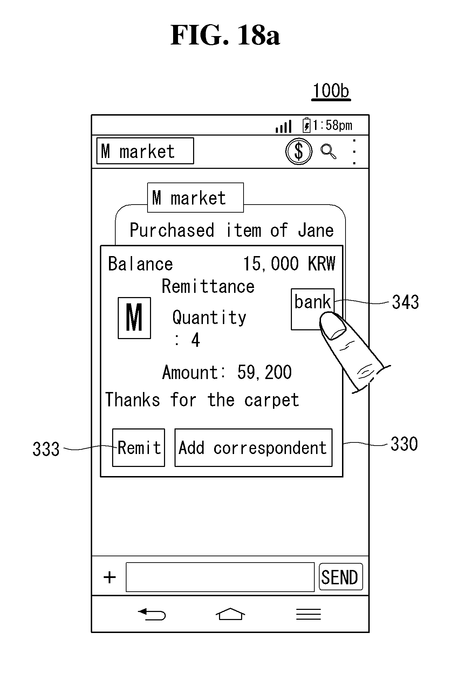

FIGs. 18a to 18c illustrate an example of carrying out a real-time account transfer during execution of a message application.

With reference to FIG. 18a, the controller of the mobile terminal 100b provides a payment window 330. The payment window 330 may include a real-time account transfer icon 343.

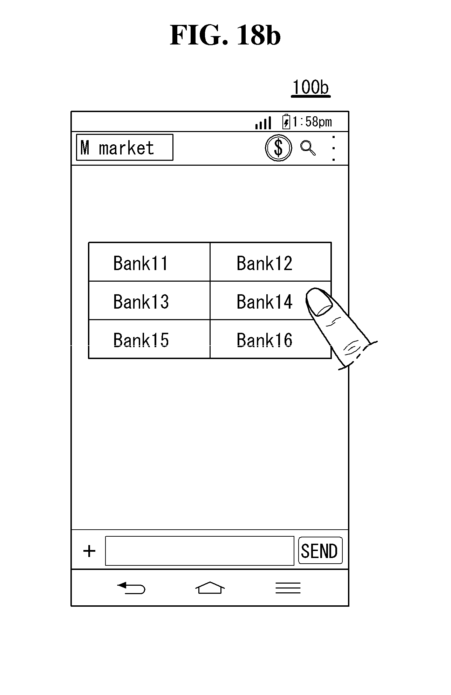

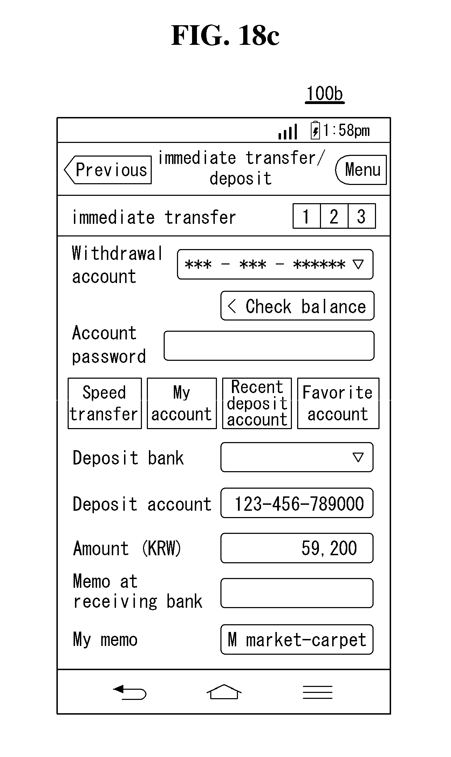

In case the real-time account transfer icon 343 is selected, the controller causes displaying of information of available financial institutions (e.g., Bank 11, Bank 12, Bank 13, Bank 14, Bank 15, Bank 16) on the execution screen of the message application, as shown in FIG. 18b. If one (e.g., Bank 14) of the financial institutions is selected, the controller of the mobile terminal 100b executes a mobile banking function specific to the selected financial institution and causes displaying of a mobile banking execution screen on the display unit, as shown in FIG. 18c.

An account number and an amount of payment can be entered via the mobile banking execution screen, and if payment is completed, the screen of the mobile terminal returns to the message application execution screen. Also, a payment complete message is displayed on the chat window as described above.

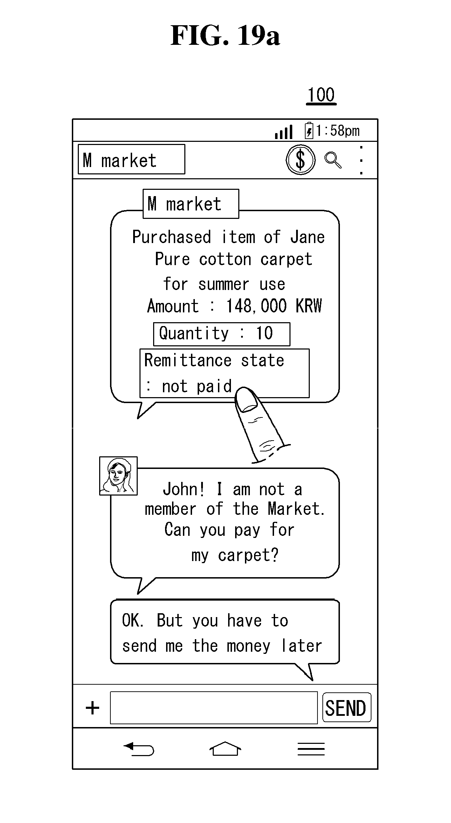

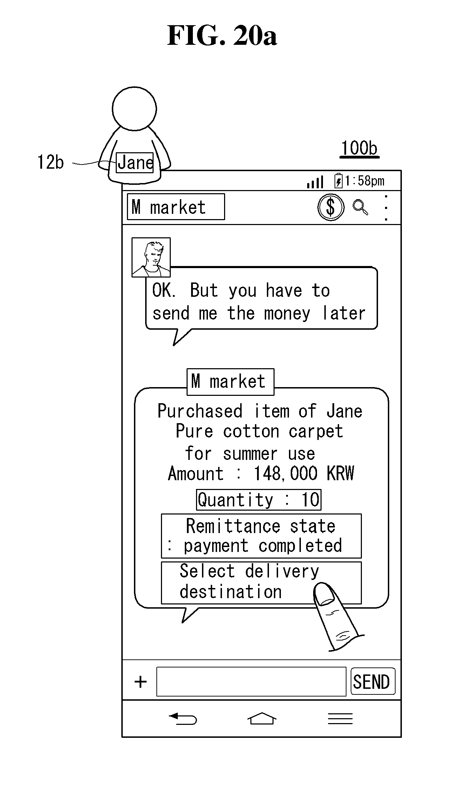

FIGs. 19a to 19c and 20a to 20c illustrate a process where some other person participating in a group purchase carries out payment for the others while the group purchase is being carried out through a message application.

As described above, if the user possesses a virtual currency that the message application provides or money to be paid to a mobile payment system, the user can carry out payment through the message application. However, according to one embodiment of the present invention, if the virtual currency is insufficient or an actual account does not have enough money to be paid for the mobile payment system, the user may ask a message correspondent to carry out payment for the user.

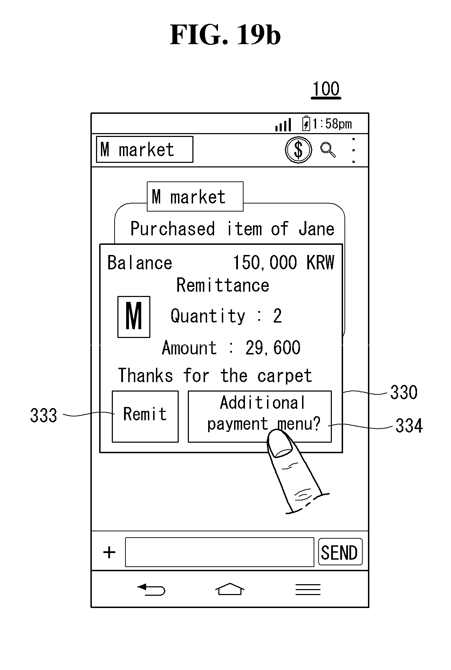

FIG. 19a shows a chat window of a mobile terminal 100 of an organizer, John 12a. The chat window includes a group purchase request result message and a message from one of message correspondents asking the organizer to carry out payment on behalf of the message correspondent. Accordingly, if a remittance state check menu included in the group purchase request result message is selected, as shown in FIG. 19b, the payment window 330 can further include an additional payment menu 334 in addition to the remittance menu 333.

The additional payment menu 334 is intended to process payment on behalf of other people participating in a group purchase through a message. If the additional payment menu 334 is selected, the controller 180 causes displaying on the touch screen 151 of a list of people participating in the group purchase.

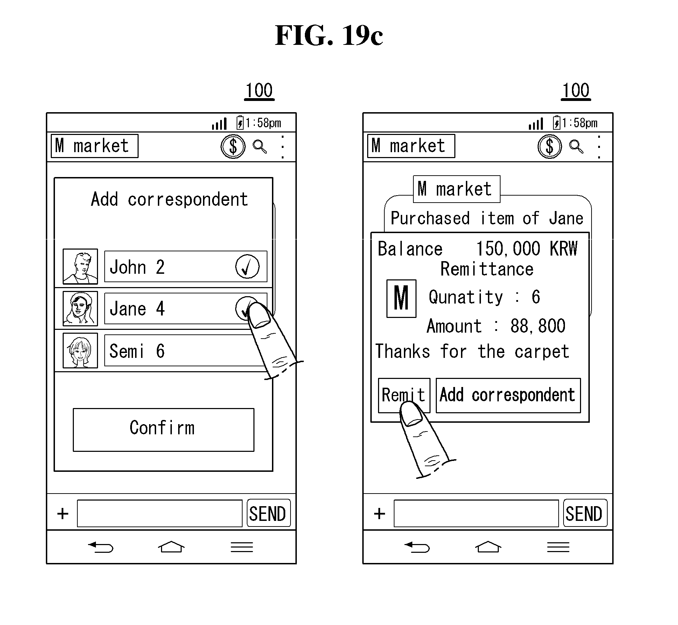

With reference to FIG. 19c, the list includes John, the group purchase organizer, Jane, and Semi; and also includes a purchase quantity of each individual participant. If an input selecting from the list a correspondent on behalf of whom to carry out payment is received, the amount of payment for the selected message correspondent is added to that of the organizer, which is then displayed in the payment window. FIG. 19c shows an example where the purchase quantity of 2 for John and the purchase quantity of 4 for Jane are added together and the amount of payment for John corresponding to the total purchase quantity of 6 is updated and displayed.

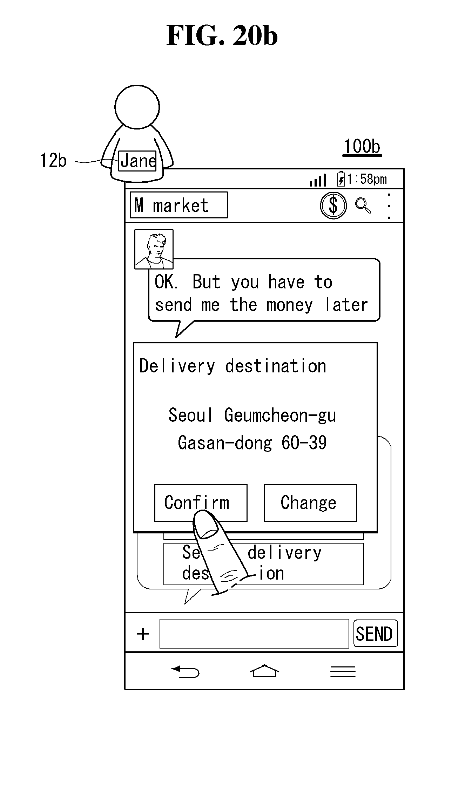

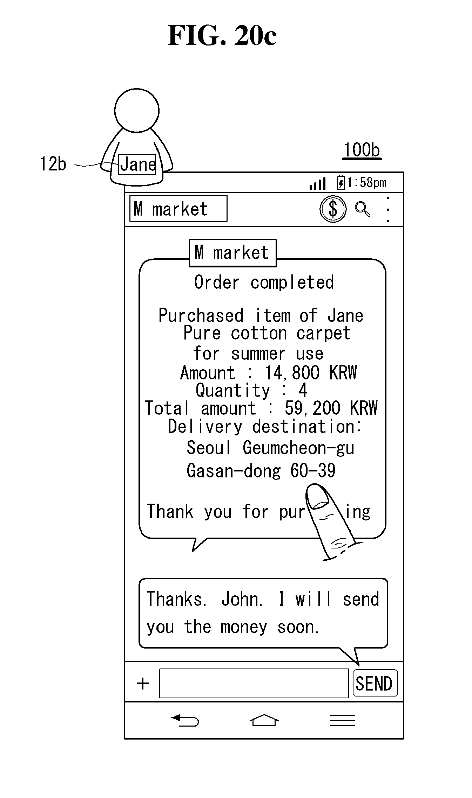

FIG. 20a shows a chat window displayed on the screen of a mobile terminal 100b of Jane 12b who has requested John to carry out payment for her. The chat window of the mobile terminal 100b displays a message showing that the payment for Jane 12b has been completed. Also, the message may include a delivery destination selection menu. If the delivery destination selection menu is selected, the controller of the mobile terminal 100b can provide the chat window with a delivery destination input window, as shown in FIG. 20b. Also, with reference to FIG. 20c, if John enters a delivery destination, the controller of the mobile terminal 100b causes displaying on the chat window of a message notifying that Jane's 12b order has been completed.

Up to this point, this document has described a process of carrying out payment at the time of a group purchase on behalf of a particular participant in conjunction with a payment function of a message application.

Meanwhile, according to one embodiment of the present invention, if the user accumulates a virtual currency that a message server provides and wants to carry out a predetermined payment function through a message application, the user can carry out payment by using the virtual currency. It should be noted that the virtual currency can be charged in real-time.

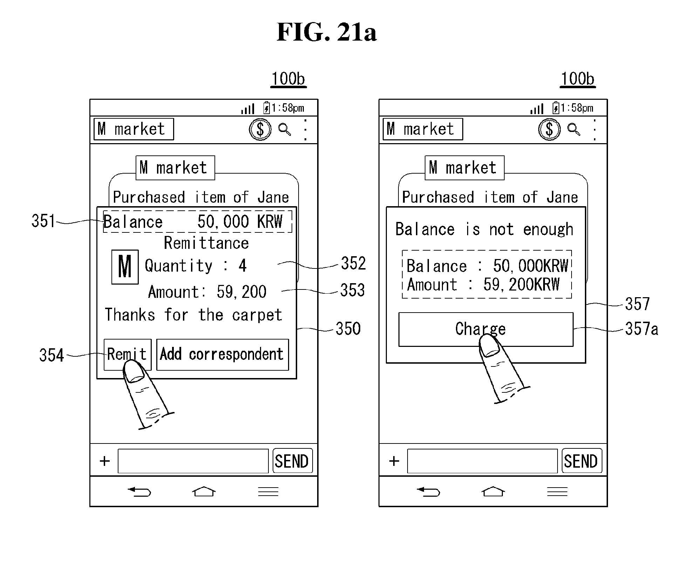

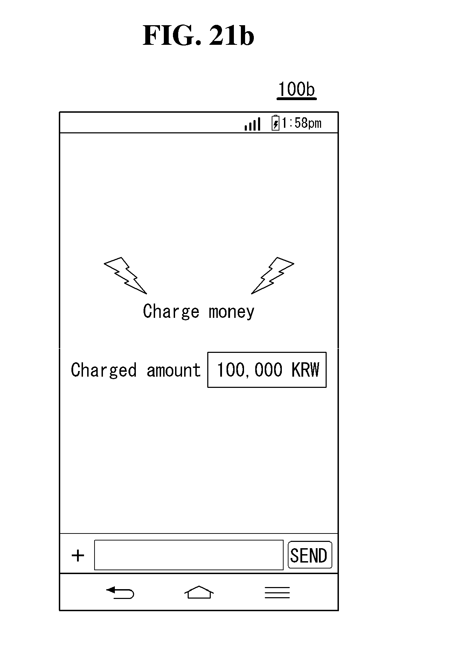

FIGs. 21a and 21b illustrate a process of charging a virtual currency that a message application provides.

With reference to FIG. 21a, a payment function is activated during execution of a message function, and the payment function is carried out while a predetermined payment window 350 is displayed on a chat window. As described above, the payment window 350 may include balance information 351 of a virtual currency that a message application (message server) provides, a purchase quantity 352, an amount of payment 353, and a remittance menu 354. If the remittance menu 354 is selected, the controller 180 compares the balance of a currently possessed virtual currency with the amount of payment. In case the balance of the virtual currency is less than the amount of payment, the controller 180 causes displaying on the chat window of a pop-up window 357 notifying that payment cannot be carried out due to a shortage of balance. Meanwhile, the pop-up window 357 may include a charge menu 357a. If the charge menu 357a is selected, the controller 180 enters the amount to be charged and charges the virtual currency as shown in FIG. 21b.

The amount of money charged can be transferred automatically to the message application (message server) through a pre-registered financial account of the message application.

In other words, according to one embodiment of the present invention, as the message server 210 providing the message application is linked to a financial server, difficulties during payment due to a shortage of balance when a predetermined payment function is supposed to be carried out through the message application can be resolved immediately.

According to one embodiment of the present invention, if it runs short of desired goods while a payment function is carried out through a message application, the shortage of goods can be posted in real-time on the chat window.

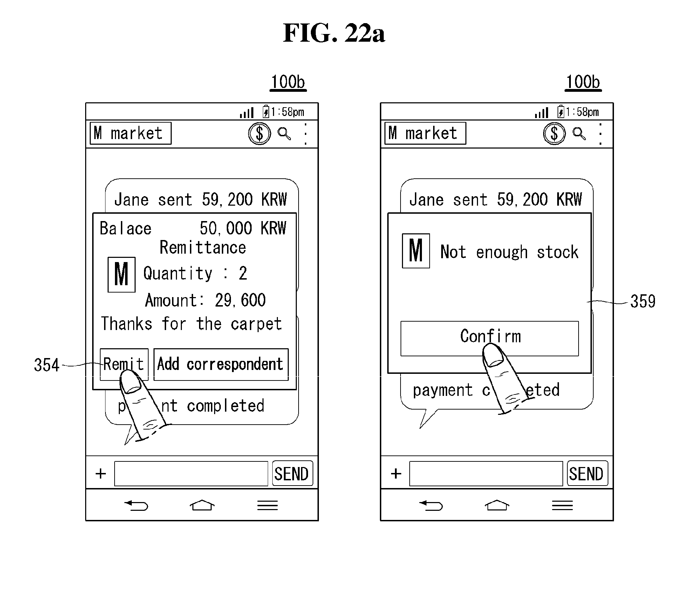

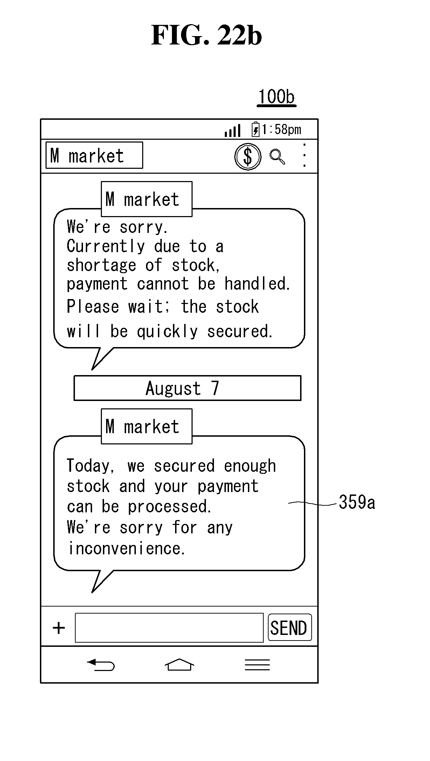

FIGs. 22a and 22b illustrate an example of providing purchase status information in real-time through a message application.

With reference to FIG. 22a, if a stock of goods requested for purchase is running short while a remittance menu is selected from a payment window, a pop-up window 359 notifying of a shortage of the stock in real-time can be displayed on a chat window. In this case, payment may not be carried out. Also, with reference to FIG. 22b, if the seller secures a stock of purchase goods, the controller 180 causes displaying on the chat window of a message 359a notifying that payment can be carried out.

In other words, according to one embodiment of the present invention, if the user attempts to carry out payment for purchased goods through a message application, the user can monitor the transaction state of purchased goods in real-time through the chat window, including a state where payment cannot be handled due to a shortage of purchase goods and a state where payment is made available as the goods are additionally stocked afterwards.

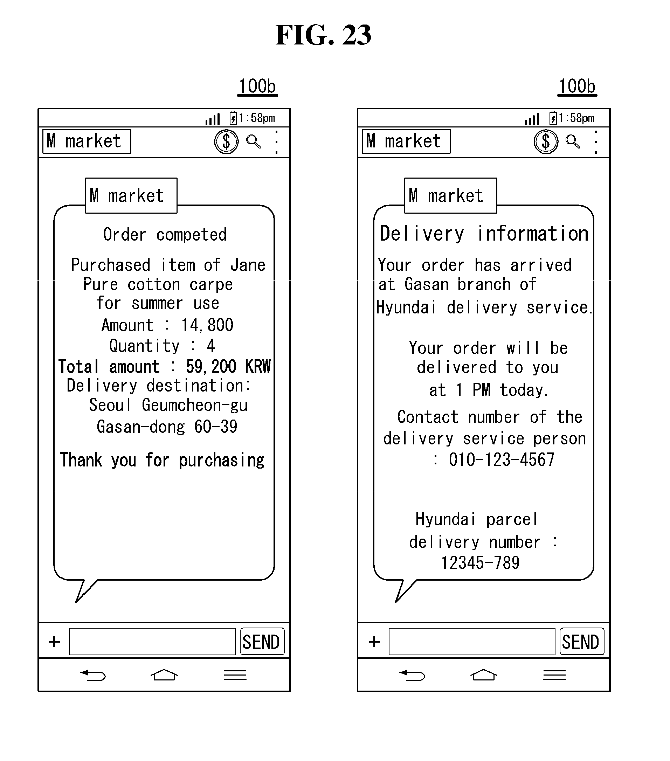

FIG. 23 illustrates another example where a purchase result is notified through a message application after a group purchase is completed through the message application.

With reference to FIG. 23, in case a group purchase is carried out through a message application, as purchase information, payment information, and so on are posted in a group chat window, people participating in the group purchase can monitor the progress of the group purchase from one chat window in real-time. However, if the order is completed as the payment process is finished, the controller 180 may open an one-to-one chat room with a merchandise seller so that order information and delivery information for a particular buyer can be provided only to a particular buyer.

The information provided through the one-to-one chat room may include specific information about delivery. For example, specific information about the delivery may include a parcel delivery number and information about a parcel delivery person. Therefore, a buyer can obtain specific information related to the delivery of purchased goods from the one-to-one chat room in addition from the group chat room.

According to one embodiment of the present invention, the user of the mobile terminal 100 can recommend purchased goods to other people, and the other people may purchase the recommended goods conveniently without separately subscribing to an online shopping mall or entering a payment means.

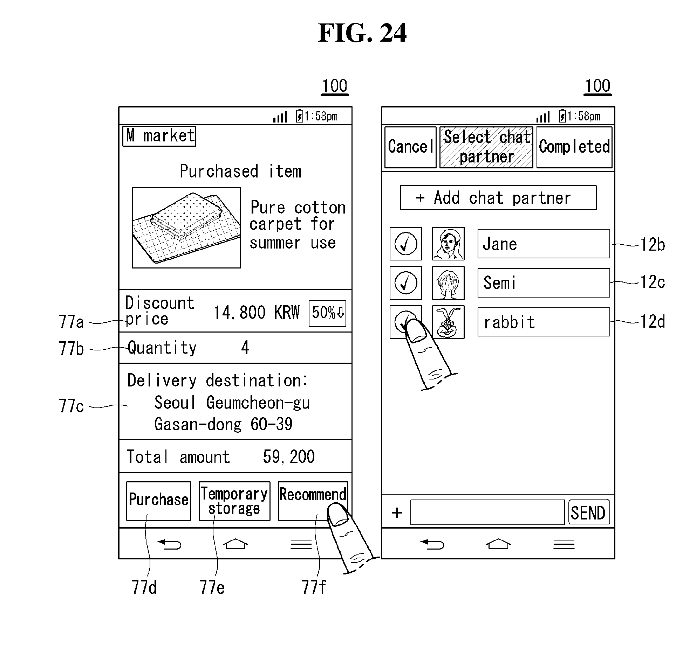

FIGs. 24 to 27 illustrate a process of recommending goods through a message application and handling a purchase for recommended goods.

With reference to FIG. 24, the user of the mobile terminal 100 can enter predetermined purchase information by executing a market application. The purchase information may include price information 77a, a purchase quantity 77b, and a delivery destination 77c. Also, the purchase information may further include an instant purchase menu 77d, a menu for temporary storage 77e, and a recommendation menu 77f.

If the recommendation menu 77f is selected, the controller 180 causes displaying on the touch screen 151 of a recommended buddy list 12b, 12c, 12d based on a message application. If one of the recommended buddy list 12b, 12c, 12d is selected, a product recommendation message can be delivered to the selected correspondent.

The user of the mobile terminal 100, after executing the market application, may execute the message application for product recommendation. On the contrary, after setting up the market as a message correspondent by executing the message application, the user may recommend a product to other people during purchase of goods supplied by the market. Meanwhile, for the convenience of description, it is assumed that the market is set up as a message correspondent and purchase of goods is carried out while a chat window with the market is opened.

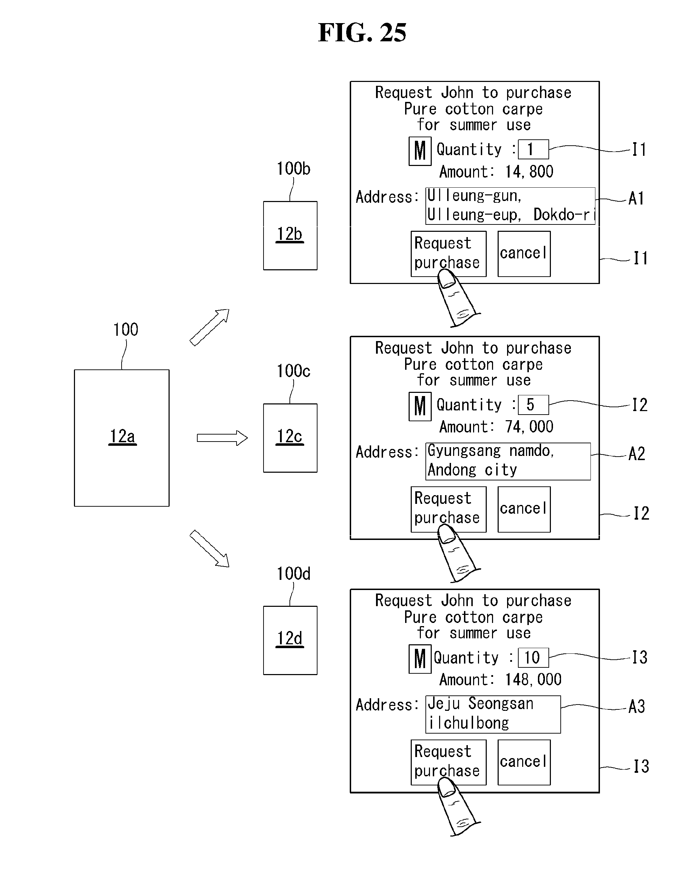

With reference to FIG. 25, recommended correspondents 12b, 12c, 12d receives the product recommendation message, and mobile terminals 100b, 100c, 100d of the recommended correspondents may display the product recommendation message on the respective screens.

Meanwhile, a purchase information input window 11, 12, 13 into which those people receiving the product recommendation message enter purchase quantities N1, N2, N3 and delivery destinations A1, A2, A3 can be displayed on the mobile terminals 100b, 100c, 100d of the respective recommended correspondents.

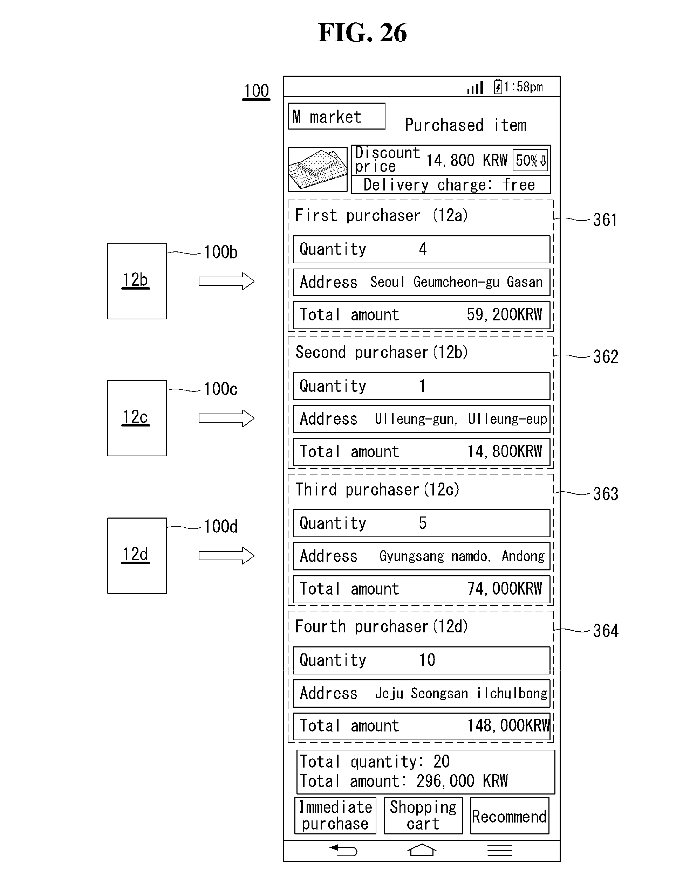

With reference to FIG. 26, the controller 180 of the mobile terminal 100 can receive purchase information from the terminals 100b, 100c, 100d of the recommended correspondents. The controller 180 causes displaying of the received purchase information on the chat window where the market is registered as a message correspondent. The chat window may display purchase information 361 of a first purchaser who is the user of the mobile terminal 100, purchase information 362 of a second purchaser who has received a recommendation for product purchase, purchase information 363 of a third purchaser, and purchase information 364 of a fourth purchaser.

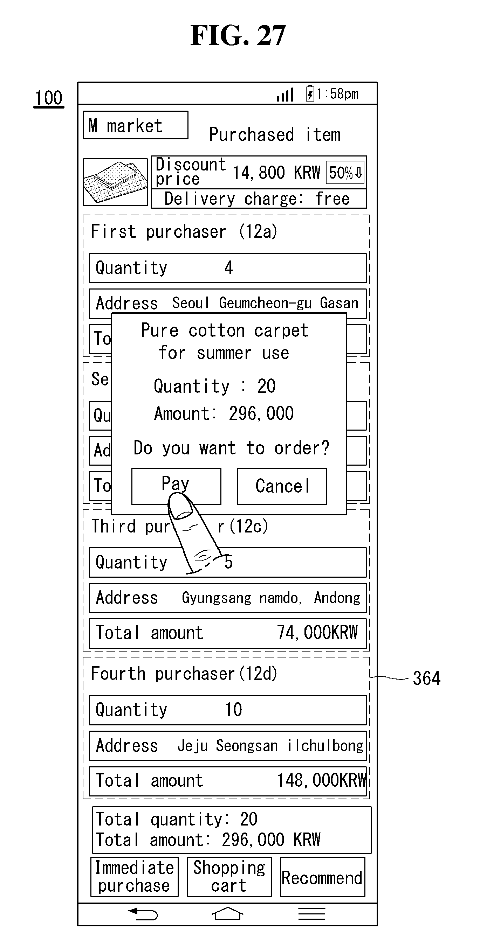

With reference to FIG. 27, the controller 180 can carry out payment with respect to the market based on the purchase information of the first and the fourth purchaser.

If an organizer 12a of a group purchase presses a payment button, the controller 180 may interpret that a lump-sum payment has been requested with respect to the group purchase. If the controller 180 receives an input for requesting a lump-sum payment for the group purchase, it carries out the lump-sum payment based on the quantity of the group purchase.

If the lump-sum payment is completed, the controller 180 causes transmission of a remittance request message for each payment to individual message correspondents 12b, 12c, 12d who have participated in the group purchase. The controller 180 may cause transmission of the remittance request message automatically once the lump-sum payment is completed.

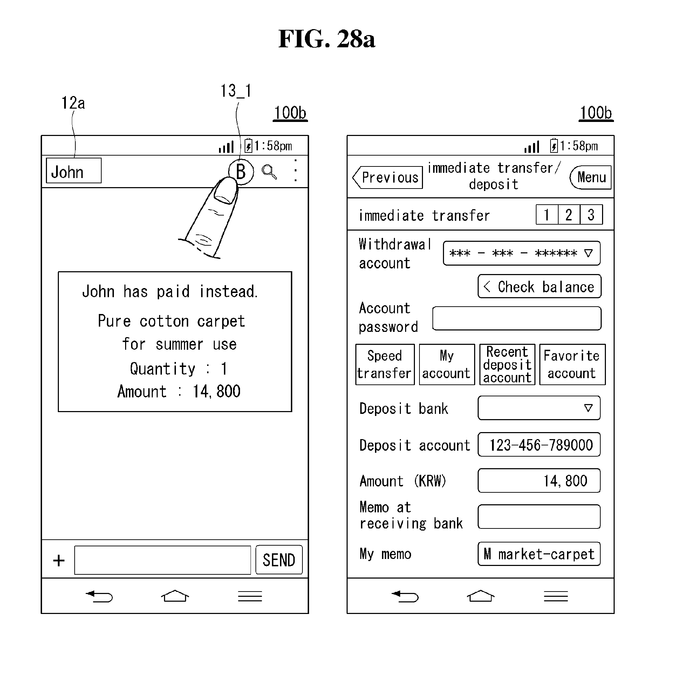

FIGs. 28a to 28c illustrate operation of a mobile terminal of each message correspondent receiving the remittance request message when the organizer of the group purchase completes the lump-sum payment.

FIG. 28a shows a screen of a mobile terminal 100b of a second purchaser 12b. With reference to FIG. 28a, if an organizer of a group purchase completes a lump-sum payment, a payment remittance request message can be transmitted to the mobile terminal 100b of the second purchaser 12b.

The payment remittance request message includes information notifying that payment has been completed by the group purchase organizer, purchased product information, a purchase quantity, and an amount of payment.

Also, the payment remittance request message is transmitted individually to each purchaser and may not be posted on a group purchase chat room.

If the payment remittance request message is transmitted, an icon 13_1 corresponding to a main bank can be displayed on the screen of the mobile terminal 100b of the second purchaser 12b. If the payment remittance request message is transmitted, a previously displayed payment icon may be changed to the icon 13_1 corresponding to the main bank.

If an input with respect to the icon 13_1 corresponding to the main bank is received, an application corresponding to the main bank is executed, and a process of transferring the amount of payment requested for remittance to the group purchase organizer is carried out.

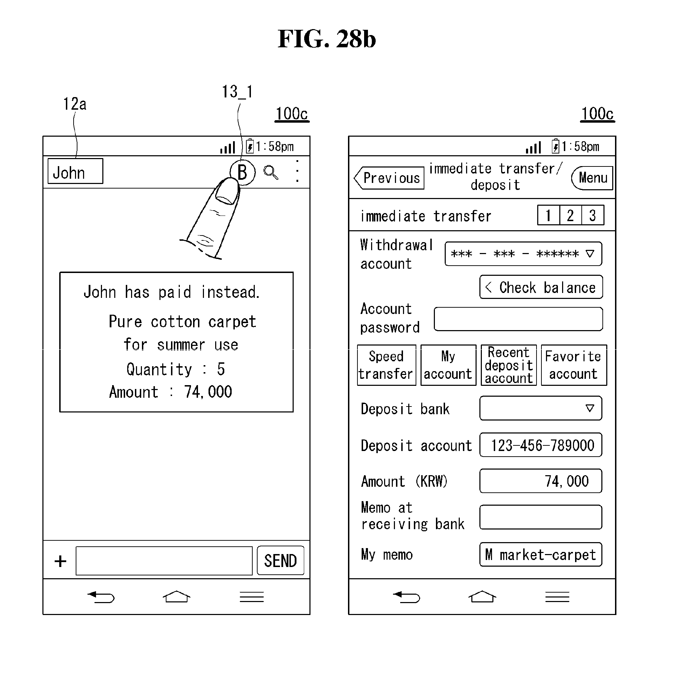

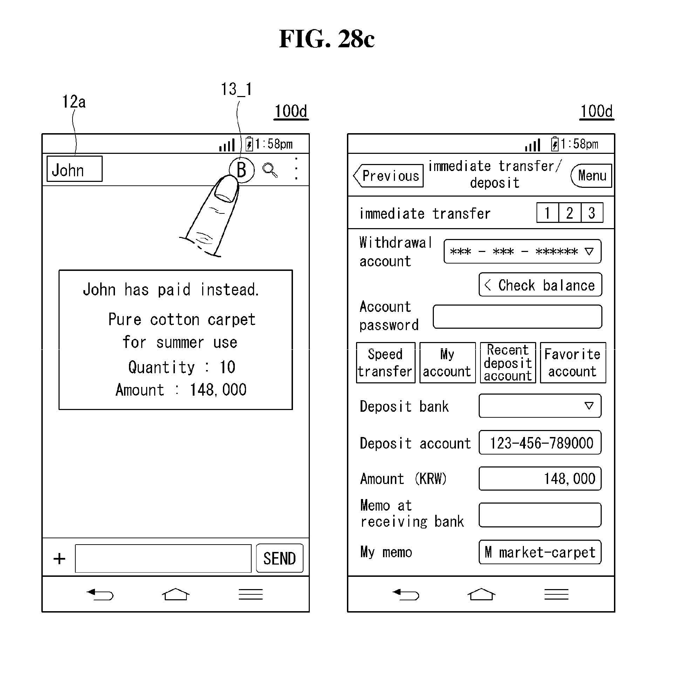

FIG. 28b shows a screen of a mobile terminal 100c of a third purchaser 12c, and FIG. 28c corresponds to a screen of a mobile terminal 100d of a fourth purchaser 12d. The operation of each mobile terminal of the third and the fourth purchaser can be carried out in the same way as a payment operation in the mobile terminal of the second purchaser.

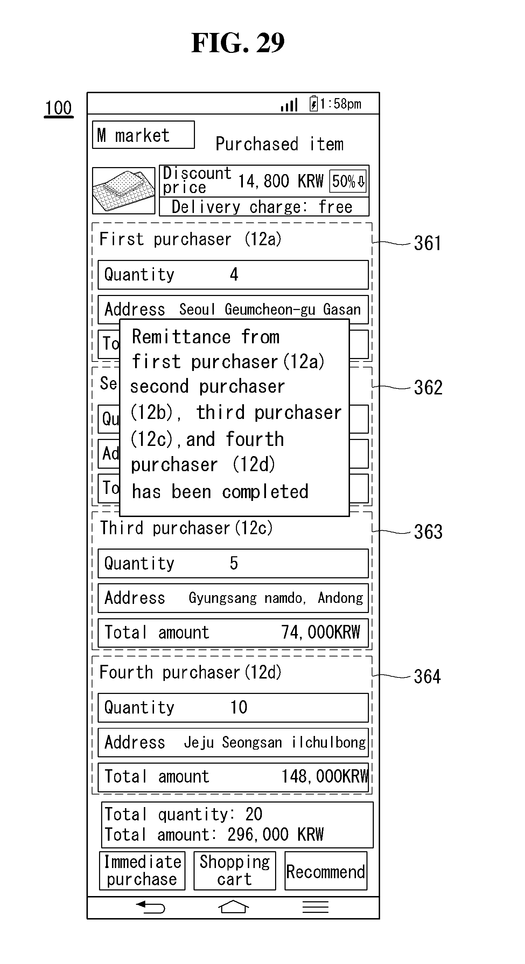

As described with reference to FIGs. 28a to 28c, if a payment remittance request message is transmitted to each of group purchase participants after the lump-sum payment by the organizer of the group purchase and each participant completes the remittance, a message notifying a remittance state for each participant can be provided as shown in FIG. 29.

The message notifying a remittance state for each participant can be provided via a group purchase chat window. Also, the message notifying a remittance state for each participant may be provided at once when all of the participants complete their remittance or whenever each participant completes his or her remittance.

According to an embodiment of the invention, there may be times when the account (including a virtual account) of the organizer of a group purchase is in short of money to process payment while the organizer tries to carry out the lump-sum payment.

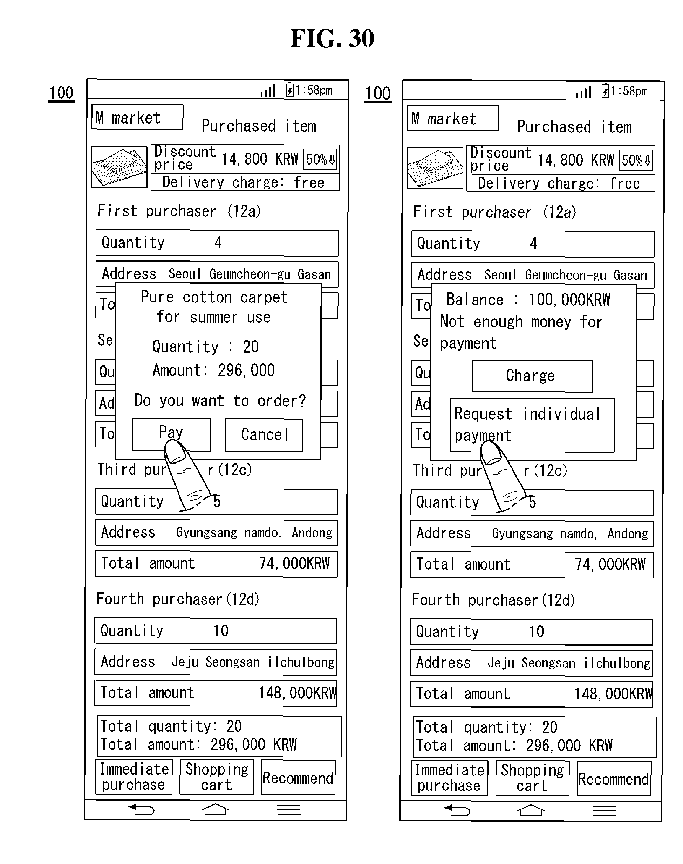

With reference to FIG. 30, if a lump-sum payment is requested with respect to a group purchase product, the controller 180 may compare the amount of balance with the amount to be paid. If the balance is larger than the amount to be paid, the lump-sum payment can be carried out. In the opposite case, however, the account can be charged or a pop-up window can be displayed to request individual payment.

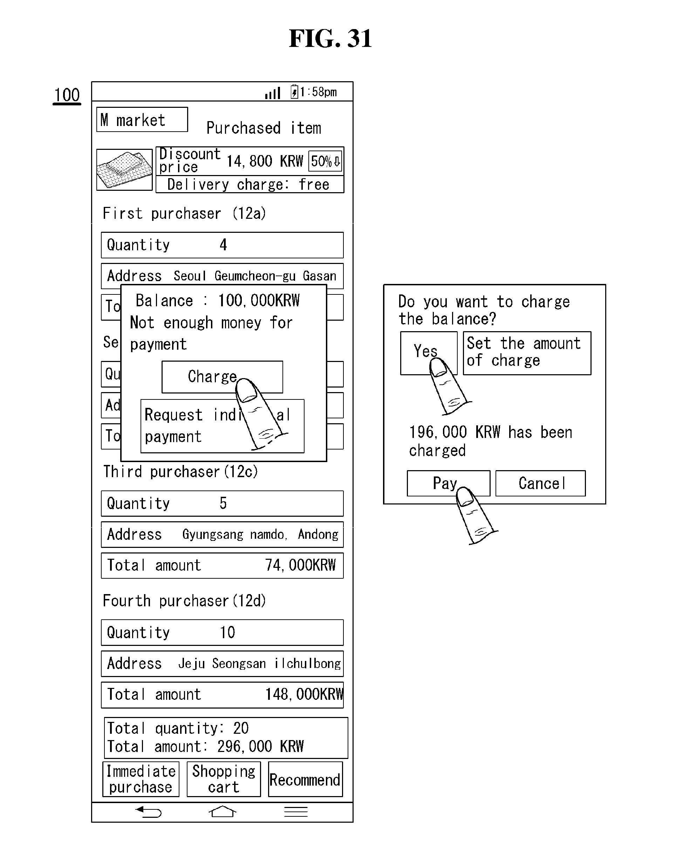

With reference to FIG. 31, if an input is received for selecting a charge menu from the pop-up window, the controller 180 may automatically charge the amount of shortage or provide a menu by which the user can set up the amount of money to be charged. If the amount of shortage is completely charged, the controller 180 can carry out a lump-sum payment for the group purchase.

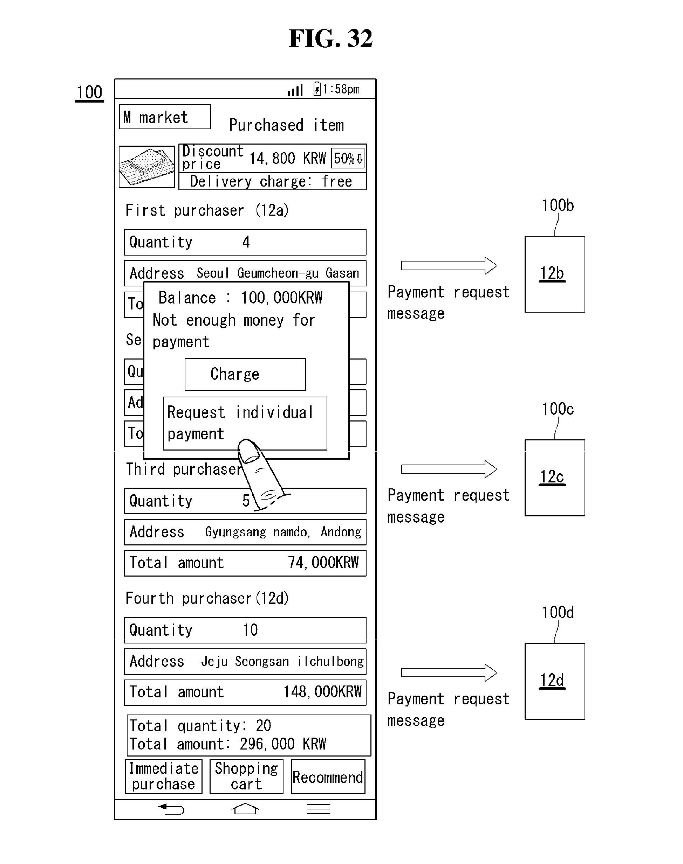

With reference to FIG. 32, if an individual payment request menu is selected via the pop-up window, the controller 180 causes transmission of a payment request message to each of message correspondents 12b, 12c, 12d participating in the group purchase.

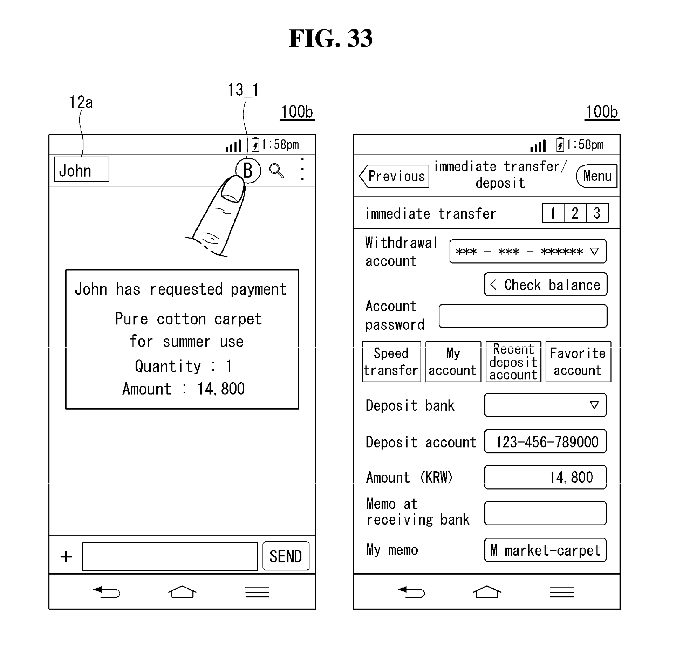

FIG. 33 illustrates an example of a screen of a mobile terminal 100b of the second purchaser 12b who has received the payment request message. If the payment request message is received, an icon 13_1 corresponding to a main bank of the second purchaser 12b is provided; if the icon 13_1 is selected, the main bank application is executed and the requested payment can be carried out.

The process of carrying out payment through the message application is the same as described in the embodiments described above; therefore, specific descriptions thereof will be omitted.

Up to this point, this document has described examples where a user carries out payment in a convenient manner without subscribing to an Internet shopping mall and separately entering account information during a process of purchasing predetermined goods through the Internet shopping mall by using a message application. Also, a purchase and a payment process carried out during a group purchase through a message have been described.

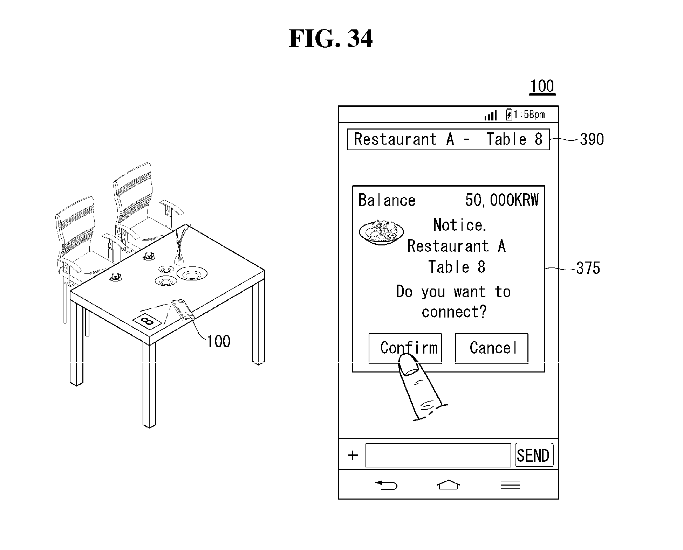

FIGs. 34, 35, 36a, 36b, 37a, and 37b illustrate an example of carrying out payment by accessing a new payment system through a message application.

The user of the mobile terminal 100 can newly register a person not included in a current message buddy list as a message correspondent to carry out payment.

With reference to FIG. 34, predetermined connection information (e. g., QR code information, NFC information, Bluetooth Low Energy (BLE)) may be provided at a particular table (table 8) in a particular restaurant (e. g., Restaurant A). If the mobile terminal 100 attempts to obtain the connection information after executing a message application and activating a payment function, the controller 180 may add the particular table of the particular restaurant as a message correspondent through a short-range communication module.

The controller 180 opens a message chat room for the newly added message correspondent and causes displaying of the message chat room on the touch screen 151. The controller 180 may also cause displaying of an inquiry window 375 inquiring whether to add the particular table of the particular restaurant as a message correspondent.

According to one embodiment of the present invention, the user can carry out a payment function based on various types of payment information received from a message system through a payment subject newly connected by the message application. According to one embodiment of the present invention, the mobile terminal 100, while possessing virtual money that the message application provides, can carry out a payment function through the newly connected payment subject by using the virtual money.

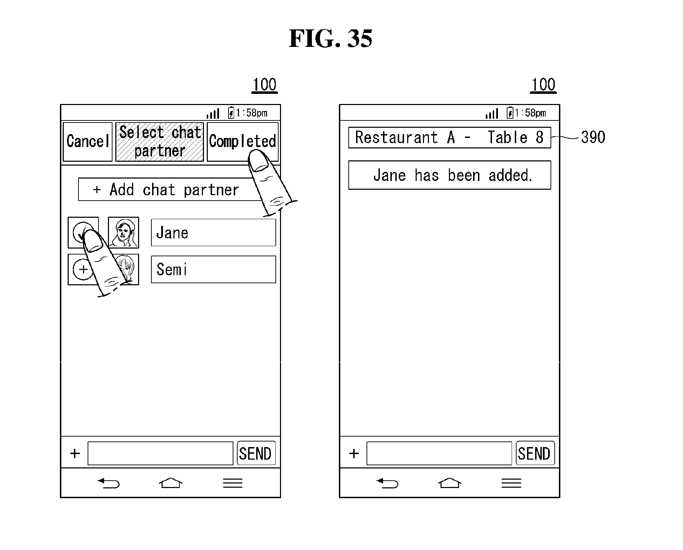

With reference to FIG. 35, the controller 180 opens a chat room with the particular table of the particular restaurant as a message correspondent, selects a particular chat partner, and adds the chat partner to the chat room. Meanwhile, the controller 180 causes displaying of the title information 390 of the chat room in the chat window, and the title information may include information by which the payment subject can be identified. Accordingly, in case the user wants to order a predetermined menu and to carry out payment for the order through the chat window, the user can intuitively learn that payment can be carried out for the order made at the particular table of the particular restaurant.

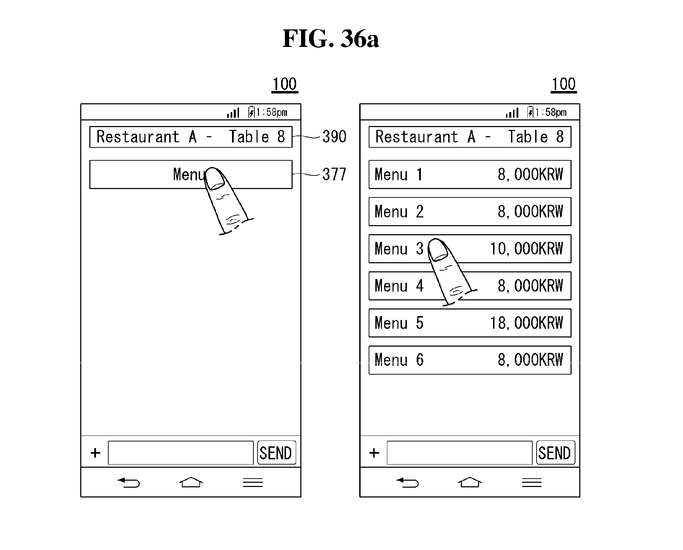

With reference to FIG. 36a, the controller 180 causes displaying on the chat window of a menu item 377 that the particular restaurant provides. If the menu item 377 is selected, the controller 180 causes displaying on the chat window of at least one menu (Menu 1, Menu 2, Menu 3, Menu 4, Menu 5, Menu 6) that the particular restaurant provides and their respective price information.

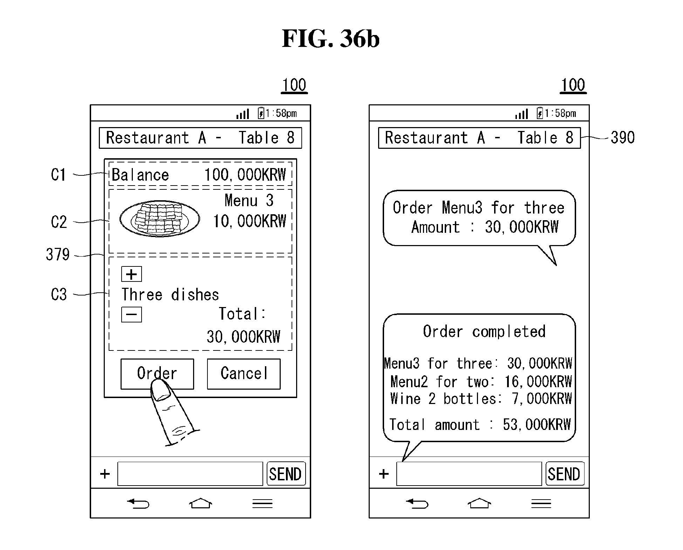

With reference to FIG. 36b, if a particular menu (Menu 3) is selected, the controller 180 causes displaying of an order information input window 379 on the chat window. The order information input window 379 may include balance information C1 of virtual money that the message application provides, selected menu information C2, and an ordered quantity C3. In case the order is completed through the order information input window 379, the controller 180 causes displaying of completed order information on the message chat window. The order information may include an ordered menu and an amount of payment.

According to one embodiment of the present invention, the controller 180 may request a message correspondent located at a geographically distant place to carry out predetermined payment.

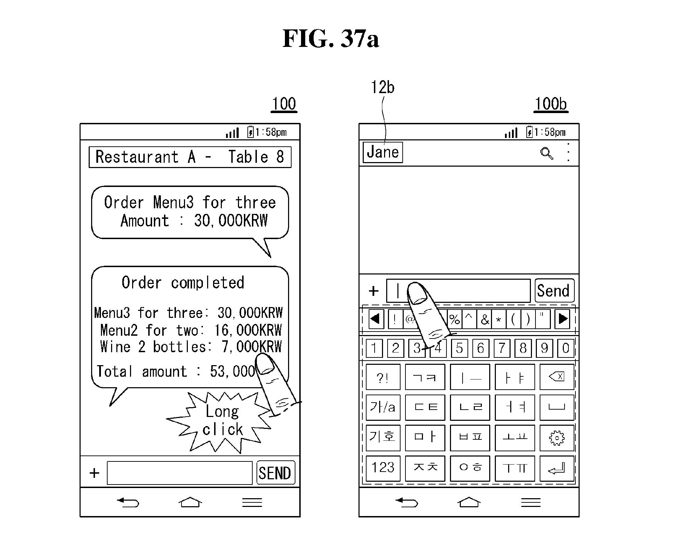

With reference to FIG. 37a, if an input for selecting the completed order information is received, the controller 180 may enter a mode in which a payment function can be carried out through the message application as described above. According to one embodiment of the present invention, if an operation of copying the order information and delivering the copied order information to a particular chat partner 12b is carried out, the particular chat partner 12b can carry out payment on behalf of the user based on the received order information. The received order information may be linked to a function of activating a payment function.

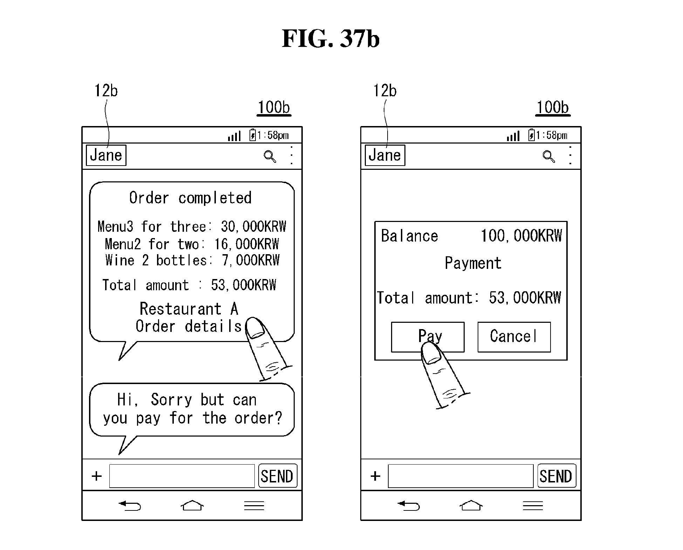

Accordingly, with reference to FIG. 37b, the received order information can be displayed on the screen of a mobile terminal of the particular chat partner 12b even if the particular chat partner does not activate a payment function during execution of a message function. And if the received order information is selected, the payment function requested by the mobile terminal 100b of the particular chat partner 12b can be carried out.

According to one embodiment of the present invention, the total amount of money to be paid can be divided among those people participating in the message through the message application.

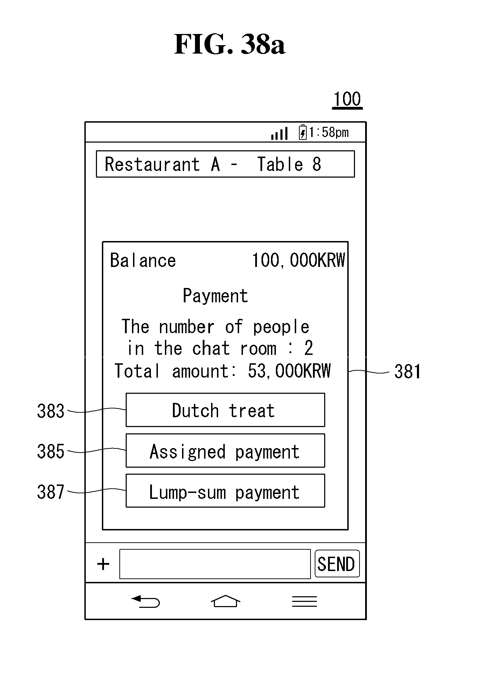

FIGs. 38a to 38d illustrate an example of carrying out payment by dividing the amount of payment during a payment process through a message application.

With reference to FIG. 38a, if a plurality of people join a chat room, various payment methods can be chosen. For example, if two people join the chat room, a payment window 381 is displayed, but the payment window 381 may include items such as Dutch treat 383, assigned payment 385, and lump-sum payment 387.

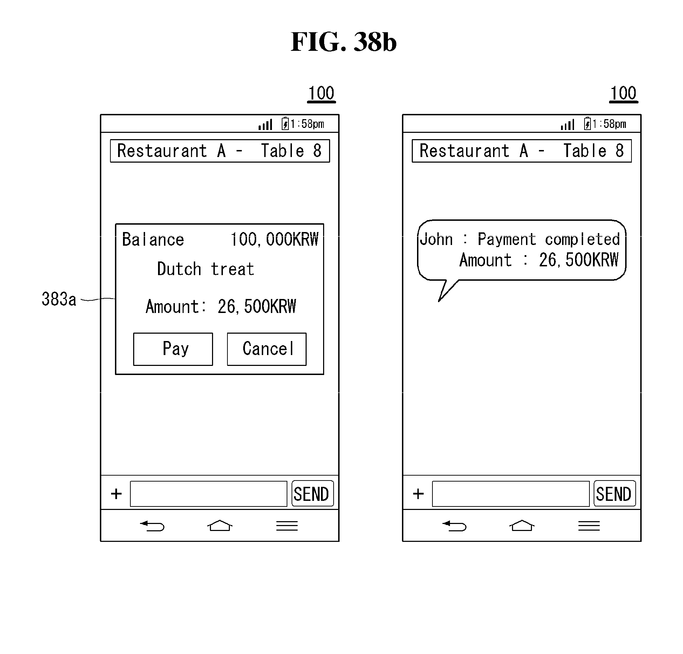

With reference to FIG. 38b, if the Dutch treat 383 is selected, the controller 180 provides the chat window with a pop-up window 383a meant for guiding the user of the mobile terminal 100 to carry out payment for the allotment assigned to the user, and if payment for the allotment is completed, a payment complete message is displayed on the chat window.

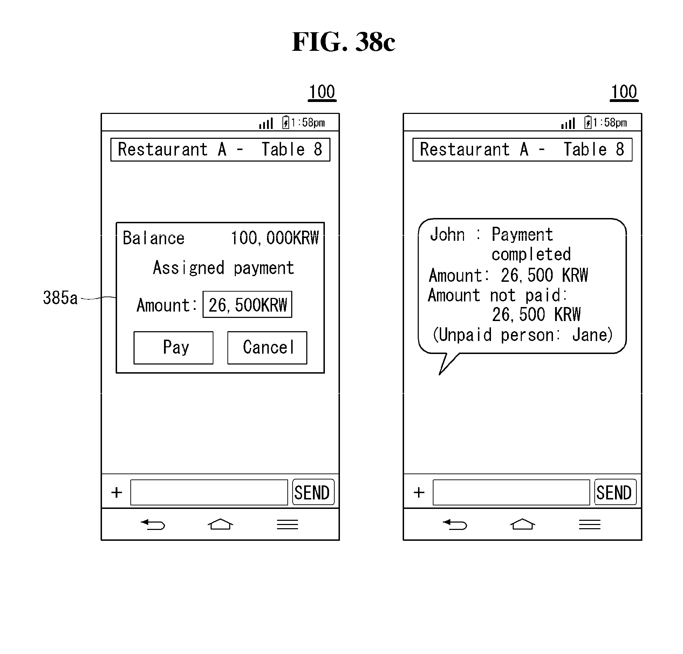

With reference to FIG. 38c, if the assigned payment 385 is selected, the controller 180 provides a chat window with a pop-up window 385a which specifies an amount of money to be paid by the mobile terminal 100. If payment for the amount of money assigned is completed, a payment complete message is displayed on the chat window. However, in this case, an amount of money not paid and information for people who haven't completed payment can be displayed together with the amount of payment assigned.

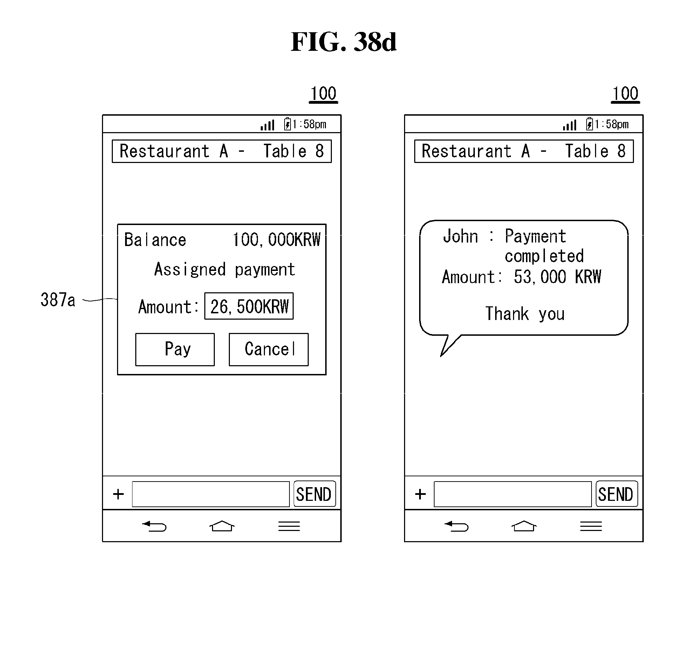

With reference to FIG. 38d, if the lump-sum payment 387 is selected, the controller 180 provides a chat window with a pop-up window 387a meant for guiding lump-sum payment, and if the lump-sum payment is completed, a payment complete message is displayed on the chat window.

According to one embodiment of the present invention, a predetermined group chat room can be formed in order to collect dues on predetermined dates.

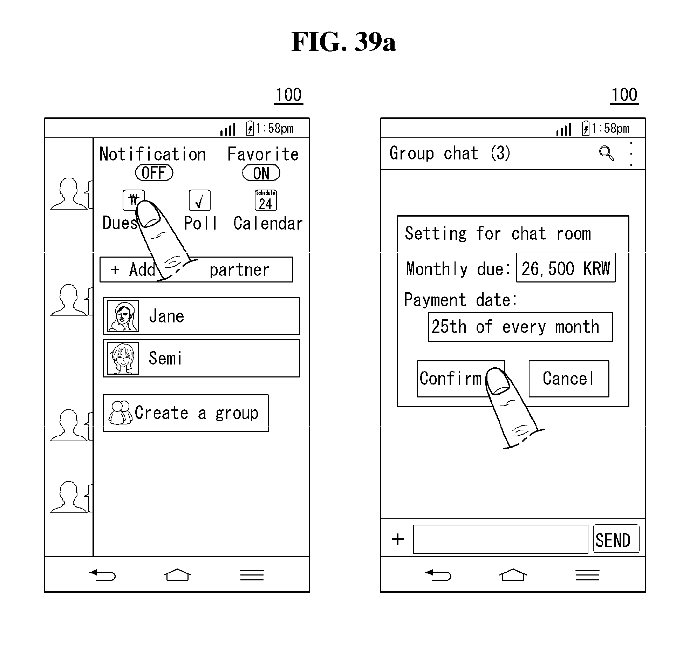

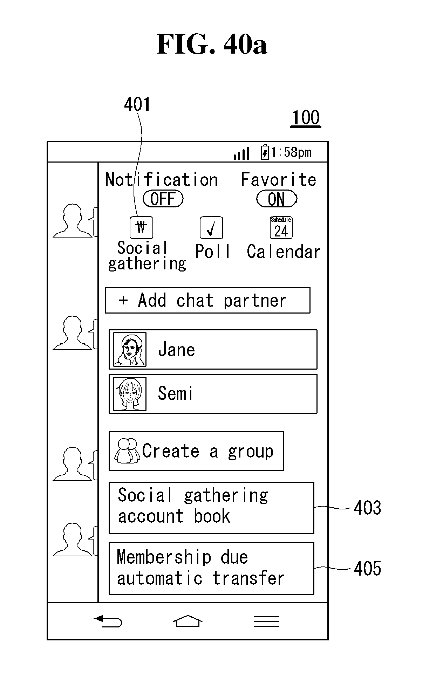

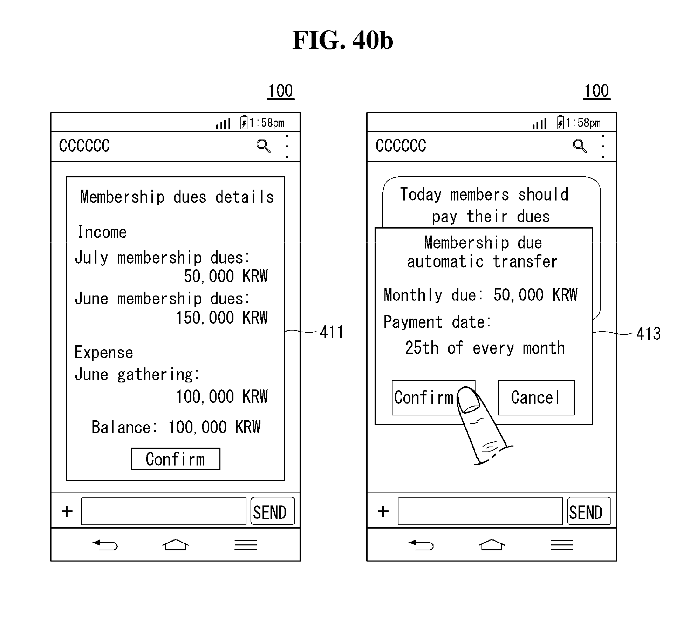

FIGs. 39a to 39c, 40a, and 40b illustrate an example where an event predetermined through a message application occurs and payment is carried out in response to the event.

The controller 180 executes a message application and opens a chat window corresponding to a predetermined event. If the predetermined event occurs, the controller 180 controls the message application so that a predetermined payment operation can be carried out through the chat window.

With reference to FIG. 39a, the controller 180 executes the message application and associates a payment function with the message application. Next, the controller 180 sets up monthly dues and monthly payment dates; the controller 180 then establishes a group meeting chat room. If the group meeting chat room is established, a meeting notification message can be displayed on the chat window.

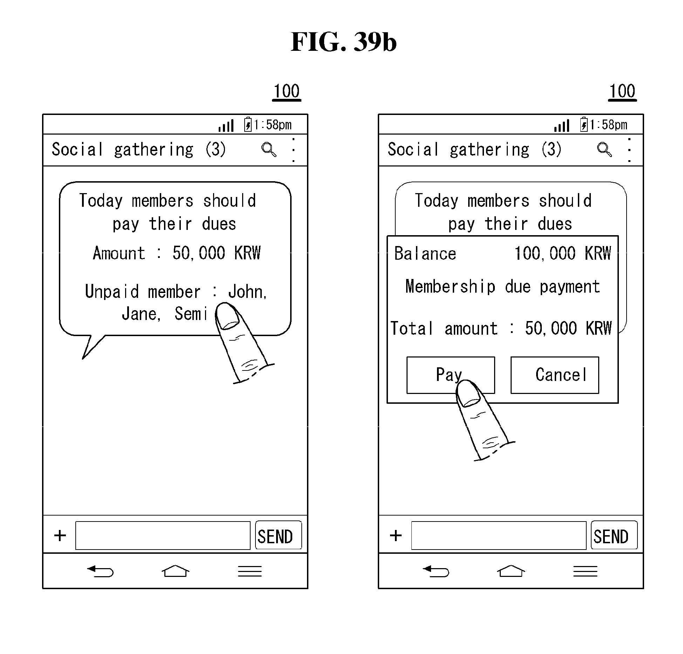

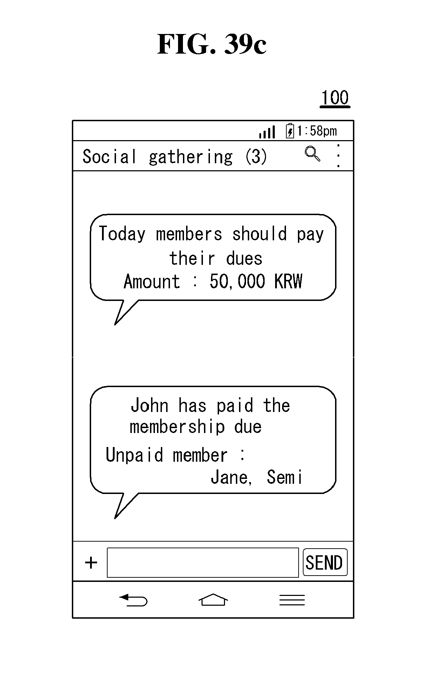

With reference to FIG. 39b, an alarm message is provided to the chat window on the monthly payment date, and if the alarm message is selected, a payment function can be carried out. Also, with reference to FIG. 39c, the controller 180 provides a payment complete message to the chat window and based on the payment processing, updates information about unpaid members and causes displaying of the updated information on the chat window.

With reference to FIG. 40a, the controller 180 causes displaying of a predetermined social gathering menu 401 on a message application execution screen. If the social gathering menu 401 is selected, the controller 180 causes displaying on the message application execution screen of identification information about participants of the social gathering, a social gathering account book menu 403 with which to check revenues and expenses related to operation of the social gathering, and membership due automatic transfer setting menu 405. FIG. 40b illustrates an example where, if the social gathering account book menu 403 is selected, the account book 411 is displayed on the chat window; and if the membership due automatic transfer setting menu 405 is selected, an automatic transfer setting window 413 is displayed on the chat window.

According to one embodiment of the present invention, a predetermined amount of payment can be settled through a message application.

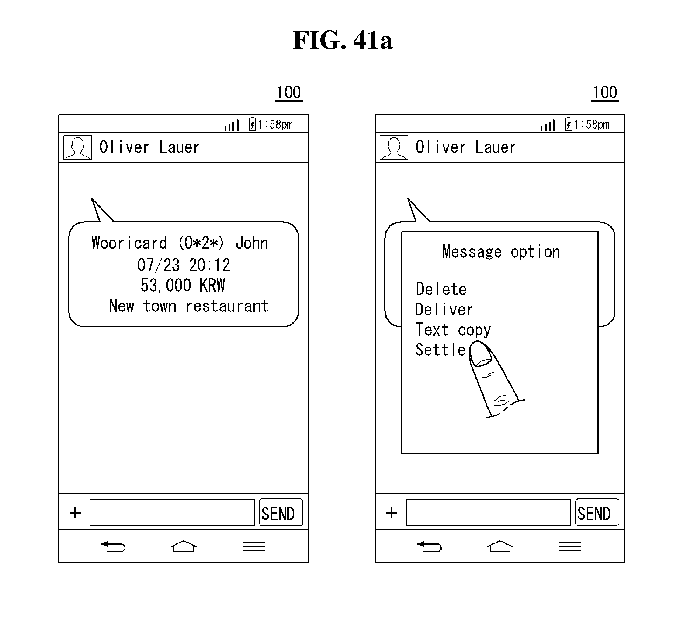

FIGs. 41a to 41d illustrate a process of settling payment in conjunction with a message payment system in case a payment check message is received.

With reference to FIG. 41a, after carrying out a predetermined payment by using a credit card, the user of the mobile terminal 100 can receive a payment complete message through a text message. The text message may be an SNS text message for example.

If a predetermined touch input is received with respect to the received payment complete message, the controller 180 may cause displaying on the touch screen 151 of a menu including predetermined items for processing the payment complete message. The menu may include a settlement item.

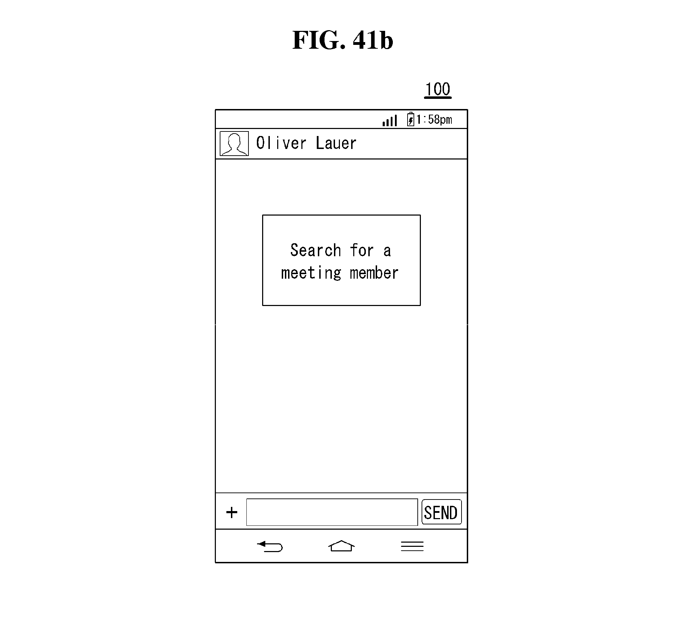

With reference to FIG. 41b, if the settlement menu is selected, the controller 180 searches for at least one person to settle the payment by using a short-range communication module (refer to FIG. 35b). In other words, the controller 180 searches for the mobile terminal of the at least one correspondent through a short-range communication module.

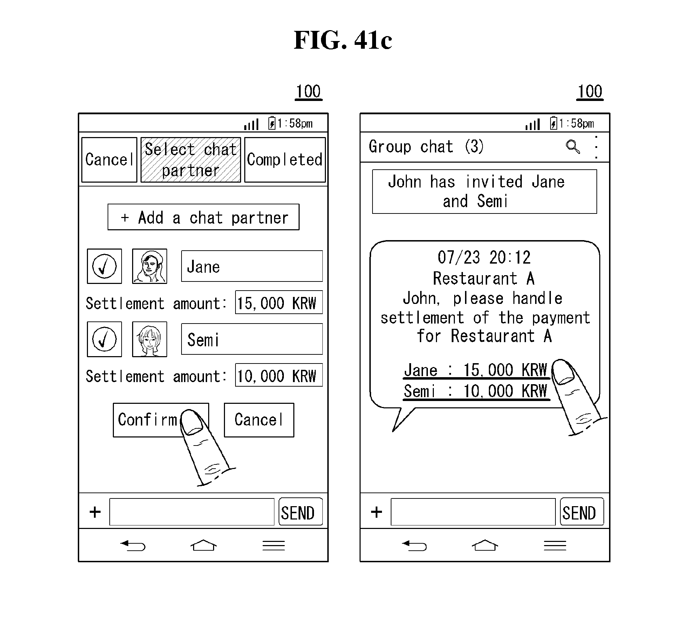

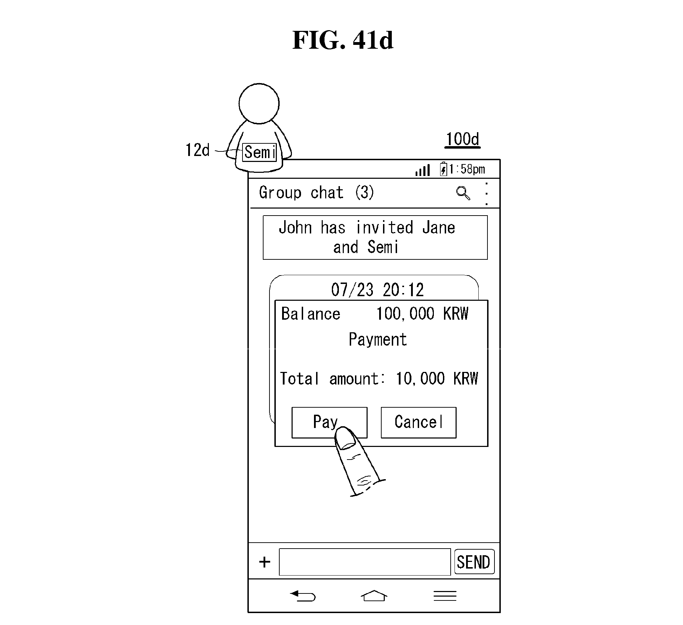

With reference to FIG. 41c, the controller 180 selects a settlement partner and invites the selected partner into a group chat room. Also, the controller 180 may cause displaying of a settlement request message in the group chat room. Further, with reference to FIG. 41d, if an invited, particular partner 12d selects the settlement request message, the controller 180 may cause displaying of a payment window on the touch screen 151.

According to one embodiment of the present invention, the mobile terminal 100 may execute a message application and based on conversation through a chat window, a predetermined product can be recommended.

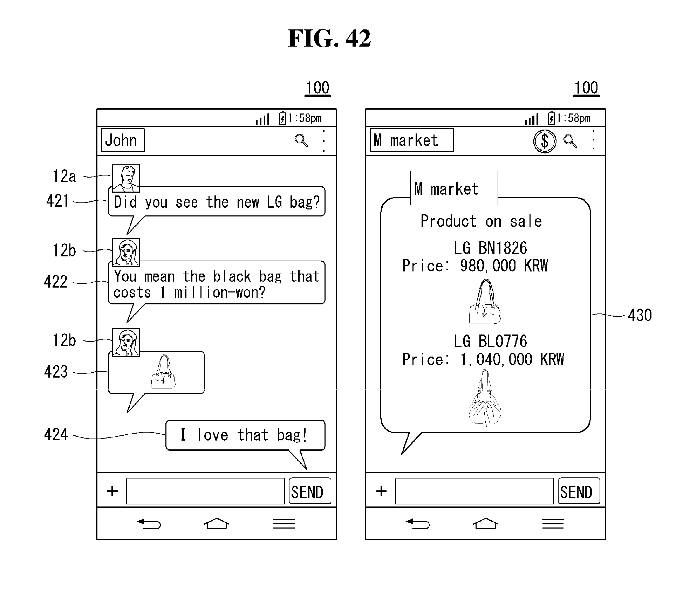

FIG. 42 illustrates another example of carrying out payment by using a message application. For example, with reference to FIG. 42, the controller 180 causes displaying of a pop-up window 430 recommending a particular product based on conversation 421, 422, 423, 424. Afterwards, if an input for selecting the pop-up window 430 is received, the controller 180 activates a payment function of the message application. If a particular product is selected among the products posted in the pop-up window 430, the controller 180 can provide the chat window with a screen through which payment for the product can be carried out as described above.

Various embodiments may be implemented using a machine-readable medium having instructions stored thereon for execution by a processor to perform various methods presented herein. Examples of possible machine-readable mediums include HDD(Hard Disk Drive), SSD(Solid State Disk), SDD(Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the mobile terminal.

The foregoing embodiments are merely exemplary and are not to be considered as limiting the present disclosure. The present teachings can be readily applied to other types of methods and apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds, are therefore intended to be embraced by the appended claims.

## Claims

1. A mobile terminal, comprising:
a display;
a wireless communication unit configured to communicate with a message server; and
a controller configured to:
execute a message application by communicating with the message server via the wireless communication unit;
cause the display to display a chat window including a merchandise seller as a message correspondent;
activate a payment function linked to the message application;
cause the display to display purchase information of a product in the chat window in response to a purchase order for the product sent to the merchandise seller;
cause the display to display a payment window over the chat window in response to an input received for selecting the purchase information; and
cause the display to display a result of a payment transaction processed for purchase of the product in the chat window in response to a payment request received via the payment window,
wherein in response to an input received for adding at least one message correspondent to the chat window in order to perform a group purchase for the product, the controller is further configured to:
update the purchase information based on a purchase quantity entered by message correspondents who participate in the group purchase; and
cause the display to display the updated purchase information in the chat window.

2. The mobile terminal of claim 1, wherein an execution screen of the message application or the chat window comprises a soft key or an icon for activating the payment function such that the payment function is activated in response to an input received via the soft key or the icon.

3. The mobile terminal of claim 1 or 2, wherein the controller is further configured to:
cause the display to display a list of message correspondents linked to a phone book stored in the mobile terminal;
add the merchandise seller to the list of message correspondents when the merchandise seller is registered as the message correspondent;
map the purchase information of the product into the list including the merchandise seller as one of the message correspondents; and
cause the display to display the mapped purchase information.

4. The mobile terminal as claimed in any one of claims 1 to 3, wherein:
the purchase information comprises a remittance state check menu by which a payment can be checked; and
the controller is further configured to cause the display to display the payment window over the chat window in response to an input received for selecting the remittance state check menu.

5. The mobile terminal as claimed in any one of claims 1 to 4, wherein the purchase information includes at least one of product information, a purchase quantity, a delivery address, or a purchase goods recommendation menu.

6. The mobile terminal as claimed in any one of claims 1 to 5, wherein the payment window includes at least one of balance information of a virtual currency charged via the message application, balance information of an account registered with a financial server, an amount of payment, or a payment execution button.

7. The mobile terminal as claimed in any one of claims 1 to 6, wherein the controller is further configured to cause the display to display, in the chat window, a message informing a delivery status of the purchased product.

8. The mobile terminal as claimed in any one of claims 1 to 7, wherein, in response to the payment request, the controller is further configured to:
cause the display to display an authentication window over the chat window; and
process the payment transaction for the purchased product based on authentication information received via the authentication window.

9. The mobile terminal as claimed in any one of claims 1 to 8, wherein the controller is further configured to register account information registered with a financial server in the message application in response to a user input.

10. The mobile terminal as claimed in any one of claims 1 to 9, wherein, in case a first message correspondent participating in the group purchase selects the purchase information, the controller is further configured to process an individual payment for the first message correspondent.

11. The mobile terminal as claimed in any one of claims 1 to 10, wherein the controller is further configured to cause the display to display group purchase notification information in a message correspondent list while the group purchase is performed.

12. The mobile terminal as claimed in any one of claims 1 to 11, wherein, in response to an input received for requesting a lump-sum payment for the group purchase, the controller is further configured to:
process the payment transaction based on the group purchase quantity; and
cause the wireless communication unit to transmit a remittance request message for payment to each of the message correspondents participating in the group purchase.

13. The mobile terminal as claimed in any one of claims 1 to 12, wherein, in case a balance is not sufficient when an input requesting lump-sum payment for the group purchase is received, the controller is further configured to charge the insufficient balance such that the lump-sum payment can be processed.

14. The mobile terminal as claimed in any one of claims 1 to 13, wherein in case a balance is not sufficient when an input requesting lump-sum payment for the group purchase is received, the controller is configured further configured to cause the wireless communication unit to transmit a payment request message to each of the message correspondents participating in the group purchase.

15. A method for controlling a mobile terminal, the method comprising:
executing a message application;
displaying, on a display, a chat window including a merchandise seller as a message correspondent;
activating a payment function linked to the message application;
displaying purchase information of a product in the chat window in response to a purchase order for the product sent to the merchandise seller;
displaying a payment window over the chat window in response to an input received for selecting the purchase information;
displaying, in the chat window, a result of a payment transaction processed for purchase of the product in response to a payment request received via the payment window; and
in response to an input received for adding at least one message correspondent to the chat window in order to perform a group purchase for the product, updating the purchase information based on a purchase quantity entered by message correspondents participating in the group purchase and displaying the updated purchase information in the chat window.
